# EUROPEAN PATENT SPECIFICATION

(11) **EP 4 410 723 B1**
(45) Date of publication and mention of the grant of the patent: **09.09.2026**
(21) Application number: 22876144.1
(22) Date of filing: 26.09.2022
(51) Int. Cl.: B65H 35/07, B65H 35/00

(54) **ADHESIVE GUIDING DEVICE, ADHESIVE APPLICATION DEVICE, AND ADHESIVE APPLICATION METHOD**
HAFTMITTELFÜHRUNGSVORRICHTUNG, HAFTMITTELAUFBRINGVORRICHTUNG UND HAFTANBRINGVERFAHREN
DISPOSITIF DE GUIDAGE D'ADHÉSIF, DISPOSITIF D'APPLICATION D'ADHÉSIF ET PROCÉDÉ D'APPLICATION D'ADHÉSIF

(30) Priority: 29.09.2021 JP 2021159443
(43) Date of publication of application: 07.08.2024
(73) Proprietor: NITTO DENKO CORPORATION, Ibaraki-shi Osaka 567-8680 (JP)
(72) Inventor: TAKASHIMA, Atsushi, Ibaraki-shi, Osaka 567-8680 (JP); MAKIHATA, Yosuke, Ibaraki-shi, Osaka 567-8680 (JP)
(74) Representative: Gill Jennings & Every LLP
(86) International application number: PCT/JP2022/035768
(87) International publication number: WO 2023/054277

(56) References cited:
- DE-A1- 10 127 814
- JP-A- 2003 020 162
- JP-A- 2003 020 162
- JP-A- 2018 111 575
- JP-A- 2018 111 575
- JP-A- H03 119 083
- JP-A- H03 119 083

## Description

### TECHNICAL FIELD

The present invention relates to an adhesive guiding apparatus, an adhesive sticking apparatus, and a method of sticking an adhesive.

### BACKGROUND ART

For example, an adhesive body such as an adhesive sheet or an adhesive tape is used for adhering various adherends such as metal, glass, wood, paper, cardboard, and plastic material. Such an adhesive body always exists in a form of being wound around a predetermined support unit such as a roll-shaped adhesive tape.

When an operator or the like performs an operation of sticking such an adhesive tape to an adherend which is an object to be stuck, and a tip end portion of the adhesive tape is pulled out from a location where the adhesive tape is wound into a roll, the roll is rewound, and the tip end portion of the adhesive tape is guided to be stuck to a surface of the adherend.

A base material in which a rear surface wound and overlapping each other and in contact with an adhesive surface of the roll-shaped adhesive tape is subjected to a peeling treatment is used in order to facilitate an unwinding operation on the roll-shaped adhesive tape. A predetermined guiding apparatus is used to prevent a portion of the adhesive tape pulled out from the roll from undergoing deformation such as flexure during a sticking operation. That is, a guide member guides the adhesive tape pulled out from the roll so as to pass through a predetermined path and is fed out straight toward the surface of the adherend.

As an adhesive tape sticking apparatus, there is an apparatus in which an adhesive tape pulled out from a tip end of a holder for storing a roll-shaped adhesive tape is pressed against an adherend by a roller provided at the tip end while the holder is moved to pull out and stick the adhesive tape to the adherend (see Patent Literatures 1 and 2). There is also an adhesive tape sticking apparatus in which an adhesive tape pulled out from a hole at a tip end of a holder for storing the adhesive tape is attached to an adherend by using a peripheral wall surrounding the hole, and is stuck to the adherend (see Patent Literature 3).

### CITATION LIST

### PATENT LITERATURE

Patent Literature 1: JPS60-44463A
Patent Literature 2: JP2016-74538A
Patent Literature 3: JPH03-119083A

### SUMMARY OF INVENTION

### TECHNICAL PROBLEM

However, since the sticking apparatuses described in Patent Literatures 1 and 2 press and stick the adhesive tape by the roller, the adhesive tape may release from the roller or deviate within a width of the roller. Therefore, a sticking accuracy is not excellent and it is difficult to make small turns. If the adhesive tape is tried to be stuck in a curved shape, the adhesive tape may twist and cannot be stuck properly.

In the sticking apparatus described in Patent Literature 3, before the adhesive tape is fed out from a leading unit, an orientation of the adhesive tape is aligned by using a roller provided in the leading unit. That is, since the tip end portion that contributes to sticking is only one side, which presses against a side without an adhesive layer of the base material of the adhesive tape, of the peripheral wall surrounding a rectangular hole, only a straight line can be drawn. The adhesive tape may deviate within a width of the rectangular hole.

By the way, in a case of actually sticking an elongated adhesive such as a roll-shaped adhesive tape to an adherend, when a sticking operation ends, it is necessary to cut and release a boundary between a sticking portion and a remaining portion of the elongated adhesive by a predetermined cutter, knife, scissors, or the like. If the elongated adhesive on a roll side (upstream side) of the boundary to be cut is not fixed, tension applied to the elongated adhesive on the upstream side temporarily fluctuates greatly as the cutting occurs.

Because of an influence of the fluctuation of tension, the vicinity of a tip end of the released elongated adhesive warps and flows backward toward the upstream side. As a result, the elongated adhesive always enters into a narrow space such as a nozzle existing around a movement path of the adhesive, resulting in an abnormal state in which the elongated adhesive sticks to the surroundings while remaining in a twisted shape.

For example, in a case of automatically sticking an elongated adhesive to an adherend, if the abnormal sticking as described above occurs during the cutting, it is difficult to automatically return the tip end portion of the elongated adhesive to a position before entering. Therefore, the above difficulty obstructs automation of the sticking operation of the elongated adhesive.

Therefore, before cutting the elongated adhesive, it is conceivable to fix the vicinity of the boundary of the cut portion of the elongated adhesive by using an appropriate chuck so that the fluctuation of tension does not occur.

However, in a case of fixing the vicinity of the boundary with a chuck during the cutting, there is an adverse effect such as a portion required for the chuck to grip the elongated adhesive and a space required for disposing the chuck. That is, a length (extra length) of an extra region generated between the tip end portion of the elongated adhesive cut by the cutter and the nozzle of the sticking apparatus becomes longer.

Therefore, in order to reduce the extra length described above, the tension applied to the elongated adhesive is kept to a relatively low level, and before the elongated adhesive is cut, a chuck or the like is used to fix a cut location of the elongated adhesive or a position on the upstream side sufficiently far from the nozzle. However, even in this case, it is impossible to sufficiently prevent a situation in which the tip end portion of the cut elongated adhesive flows backward and enters into the nozzle or the like when the elongated adhesive is cut.

When the tip end portion of the elongated adhesive is stuck to the adherend for the first time, by pressing the tip end portion of the elongated adhesive against the adherend, a force in a backflow direction is applied to the elongated adhesive from a tip end side, and the elongated adhesive may enter into the nozzle before the tip end sticks to the adherend. If the tip end of the elongated adhesive fails to stick due to such entering, the sticking operation must be interrupted and the tip end portion of the elongated adhesive must be manually pulled out from the nozzle.

The present invention has been made in view of the above situation, and an object thereof is to provide an adhesive guiding apparatus, an adhesive sticking apparatus, and a method of sticking an adhesive that can prevent the elongated adhesive from entering into a nozzle due to a fluctuation of tension applied to the elongated adhesive.

### SOLUTION TO PROBLEM

In order to achieve the object described above, an adhesive guiding apparatus, an adhesive sticking apparatus, and a method of sticking an adhesive according to the present invention are characterized by the following (1) to (15).
(1) An adhesive guiding apparatus having an adhesive path configured to allow an elongated adhesive to pass through in a longitudinal direction of the elongated adhesive, and capable of guiding at least a tip end portion of the elongated adhesive to a position facing a desired object to be stuck, the adhesive guiding apparatus including:
   a nozzle unit having a through hole forming a part of the adhesive path, and in which a tip end portion of the through hole is configured to be disposed at a position facing the object to be stuck; and
   a braking member disposed on an upstream side of the through hole of the nozzle unit on the adhesive path, in which
   the braking member has a property that is superior to the nozzle unit in at least one of ease of sticking to the elongated adhesive and a difficulty in slipping.
(2) The adhesive guiding apparatus according to the above (1), in which
   the elongated adhesive is a threadlike adhesive.
(3) The adhesive guiding apparatus according to the above (2), in which
   the through hole forms a cylindrical space larger than an outer shape of the elongated adhesive in the nozzle unit as the part of the adhesive path.
(4) The adhesive guiding apparatus according to any one of the above (1) to (3), in which
   the braking member has a function of inhibiting the elongated adhesive from flowing backward toward an upstream direction when a force applied to the tip end portion of the elongated adhesive changes while the tip end portion of the elongated adhesive led out from a tip end portion of the nozzle unit is facing the object to be stuck.
(5) The adhesive guiding apparatus according to any one of the above (1) to (3), in which
   at least one of a material, a structure, a shape, and a dimension of a portion of the braking member facing the adhesive path is determined such that an adhesive force generated when adhering the object to be stuck and the elongated adhesive is relatively larger than an adhesive force generated when adhering the braking member and the elongated adhesive.
(6) The adhesive guiding apparatus according to the above (2) or (3), in which
   the braking member has a through hole forming a part of the adhesive path, and
   a ratio of a hole diameter of the through hole of the nozzle unit to a hole diameter of the through hole of the braking member is 1:0.7 to 1.5.
(7) The adhesive guiding apparatus according to any one of the above (1) to (3), in which
   a feeding mechanism configured to feed out the elongated adhesive into the adhesive path toward the nozzle unit is disposed at an upstream side of the braking member, and
   a holding mechanism configured to hold a part of the fed out elongated adhesive is disposed between the feeding mechanism and the braking member.
(8) The adhesive guiding apparatus according to the above (3), in which
   the nozzle unit includes a pressing unit configured to press the elongated adhesive led out from the through hole against a surface of the object to be stuck at a tip end portion facing the object to be stuck, and
   the pressing unit is formed at a plurality of locations or over an entirety of an outer peripheral edge portion of the through hole.
(9) The adhesive guiding apparatus according to any one of the above (1) to (3), in which
   the nozzle unit has a funnel-shaped concave portion that communicates with the through hole in the vicinity of a top portion,
   the braking member has an inverted cone shape configured to fit into the funnel-shaped concave portion,
   the braking member has a through hole in a portion corresponding to the adhesive path, and
   the braking member is supported at a location of the funnel-shaped concave portion in a movable state with respect to the nozzle unit.
(10) The adhesive guiding apparatus according to any one of the above (1) to (3), in which
   the braking member includes one or more spheres whose surfaces are disposed at positions adjacent to the adhesive path, and a sphere support unit configured to support the one or more spheres in a rotatable state and hold the one or more spheres within a predetermined region.
(11) The adhesive guiding apparatus according to any one of the above (1) to (3), in which
   the nozzle unit has a concave portion that communicates with the through hole in the vicinity of a top portion,
   the braking member has a rod-shaped body configured to fit into the concave portion,
   the rod-shaped body is disposed at a position adjacent to the adhesive path, and
   the rod-shaped body is supported at a location of the concave portion in a movable or rotatable state with respect to the nozzle unit.
(12) The adhesive guiding apparatus according to any one of the above (1) to (3), further including:
   a winding body configured to hold the elongated adhesive to be wound around surroundings;
   a feeding mechanism configured to pull out the elongated adhesive from the winding body and feed out the elongated adhesive toward the nozzle unit; and
   an assist mechanism configured to apply an external force in a feeding direction to the elongated adhesive fed out from the winding body, in which
   the nozzle unit presses the fed out elongated adhesive against the object to be stuck.
(13) The adhesive guiding apparatus according to any one of the above (1) to (3), further including:
   a positioning mechanism configured to support the nozzle unit and adjust a positional relationship between the nozzle unit and the object to be stuck; and
   an absorption mechanism configured to correct a relative position of the nozzle unit and the positioning mechanism with respect to a pressing direction when a tip end of the nozzle unit presses the elongated adhesive against the object to be stuck.
(14) An adhesive sticking apparatus, including:
   the adhesive guiding apparatus according to any one of the above (1) to (3).
(15) A method of sticking an adhesive, including:
   sticking the elongated adhesive to the object to be stuck by using the adhesive sticking apparatus according to the above (14).

According to the adhesive guiding apparatus configured as described in the above (1), even if tension applied to the elongated adhesive is suddenly reduced as the elongated adhesive stuck on the object to be stuck is cut, the tip end portion of the elongated adhesive can be prevented from entering into the through hole of the nozzle unit. That is, the braking member sticks to the elongated adhesive more easily or slips harder than the nozzle unit, and thus the braking member can stop the cut elongated adhesive from flowing backward toward the upstream side, and the elongated adhesive can be prevented from sticking to the nozzle unit. Therefore, there is no need to manually pull out the tip end of the elongated adhesive from the nozzle unit and adjust a position each time the cutting is performed, and a sticking operation can be easily automated. A change in tension during the cutting can be tolerated, and thus there is no need to fix the elongated adhesive with a chuck or the like on a downstream side of the nozzle unit during the cutting. Therefore, a length of an extra region generated at an end portion of the elongated adhesive during the sticking operation can be reduced.

According to the adhesive guiding apparatus configured as described in the above (2), the elongated adhesive is threadlike, and thus it is easy to eliminate restrictions on the sticking direction and a bending direction. Therefore, it is possible to stick the elongated adhesive in various directions continuously, and it is possible to cope with changes in the shape and orientation of a surface to be stuck.

According to the adhesive guiding apparatus configured as described in the above (3), the through hole forms the space larger than the outer shape of the elongated adhesive, and thus even if the sticking direction of the elongated adhesive changes, the through hole is difficult to obstruct the elongated adhesive from passing through.

According to the adhesive guiding apparatus configured as described in the above (4), for example, when the elongated adhesive is started to stick or is cut after sticking, if the tension changes while the tip end portion of the elongated adhesive is not stuck to the object to be stuck, the elongated adhesive may flow backward toward the upstream direction, but the backflow is prevented by the braking member. Therefore, the tip end portion of the elongated adhesive can be prevented from entering into the nozzle unit.

According to the adhesive guiding apparatus configured as described in the above (5), the adhesive force generated when adhering the braking member and the elongated adhesive is larger than the adhesive force generated when adhering the object to be stuck and the elongated adhesive. Therefore, after the tip end portion of the elongated adhesive sticks to the object to be stuck, it becomes easy to pull and release the elongated adhesive from the braking member. That is, the elongated adhesive is released from the braking member and pulled out from the downstream side due to a tensile force generated by relative movement between the nozzle unit and the object to be stuck, and readhesion between the elongated adhesive and the braking member is prevented.

According to the adhesive guiding apparatus configured as described in the above (6), if the tension at the tip end portion of the elongated adhesive changes, the elongated adhesive may flow backward toward the upstream direction, but the backflow is prevented by the elongated adhesive sticking to a peripheral wall of the through hole of the braking member. Here, if the through hole of the braking member is too large, the elongated adhesive may not stick to the peripheral wall of the through hole, and the elongated adhesive may fail to stick to the adherend, and if the through hole is too small, the elongated adhesive may not be able to enter in to perform sticking. Therefore, by setting the ratio of the hole diameter of the through hole of the nozzle unit to the hole diameter of the through hole of the braking member to 1:0.7 to 1.5, it is possible to increase a probability of successful sticking of the threadlike adhesive.

According to the adhesive guiding apparatus configured as described in the above (7), the elongated adhesive can be smoothly fed out toward the nozzle unit by using the feeding mechanism. Therefore, it is easy to continuously pull out a tip end side of the elongated adhesive without strongly pulling the tip end side of the elongated adhesive, and it is possible to efficiently perform an operation of continuously sticking the elongated adhesive. If a part of the elongated adhesive is held by the holding mechanism during the cutting, a fluctuation in tension is prevented from being transmitted to a feeding mechanism side, and flexure or deformation of the elongated adhesive can be prevented in the middle of the elongated adhesive.

According to the adhesive guiding apparatus configured as described in the above (8), by pressing the pressing unit of the nozzle unit against the object to be stuck, the elongated adhesive can be stuck while maintaining a state in which the elongated adhesive is pressed against a desired portion of the object to be stuck. The pressing unit is formed at the plurality of locations or over the entirety of the outer peripheral edge portion of the through hole, and thus when the elongated adhesive is threadlike, the sticking direction can be easily changed midway.

According to the adhesive guiding apparatus configured as described in the above (9), regardless of a direction of the flexure generated when the elongated adhesive flows backward, the elongated adhesive comes into contact with the peripheral wall of the through hole in the braking member to become an adhesive state, and the backflow of the elongated adhesive can be restricted. The braking member has the inverted cone shape that can be fitted into the funnel-shaped concave portion and is movable with respect to the nozzle unit, and thus the braking member can be prevented from restricting the movement of the elongated adhesive too much. That is, when the elongated adhesive flows backward, the braking member appropriately separates from the funnel-shaped concave portion, and it is possible to prevent the elongated adhesive from flexing into a complicated shape that is difficult to automatically repair. When the elongated adhesive moves in a forward direction, the braking member returns into the funnel-shaped concave portion and easily separates from the elongated adhesive.

According to the adhesive guiding apparatus configured as described in the above (10), the surface of the sphere easily comes into contact with the elongated adhesive passing through the adjacent position to become the adhesive state, and the flowback of the elongated adhesive can be restricted. The sphere is rotatable, and thus the sphere can be prevented from restricting the movement of the elongated adhesive too much. Accordingly, it is possible to prevent the elongated adhesive from flexing into a complicated shape that is difficult to automatically repair.

According to the adhesive guiding apparatus configured as described in the above (11), regardless of the direction of the flexure generated when the elongated adhesive flows backward, the elongated adhesive comes into contact with the surface of the rod-shaped body and the like to become the adhesive state, and the flowback of the elongated adhesive can be restricted. The rod-shaped body has a shape that can fit into the concave portion of the nozzle unit, and is movable or rotatable with respect to the nozzle unit, and thus the rod-shaped body can be prevented from restricting the movement of the elongated adhesive too much. That is, when the elongated adhesive flows backward, the rod-shaped body appropriately separates from the concave portion, and the elongated adhesive can be prevented from flexing into a complicated shape that is difficult to automatically repair. When the elongated adhesive moves in the forward direction, the rod-shaped body returns into the concave portion and easily separates from the elongated adhesive.

According to the adhesive guiding apparatus configured as described in the above (12), by an operation of the assist mechanism, the elongated adhesive is fed out from the winding body toward the downstream side. Therefore, the elongated adhesive can be fed out without applying the large tension to the elongated adhesive at the nozzle unit, and the elongated adhesive can be easily pulled out and stuck continuously by the relative movement between the nozzle unit and the object to be stuck.

According to the adhesive guiding apparatus configured as described in the above (13), the positioning mechanism adjusts the positional relationship between the nozzle unit and the object to be stuck, and thus the automatic sticking operation becomes easily. The absorption mechanism adjusts the relative position in the pressing direction, and thus it is possible to stabilize the tension applied to the elongated adhesive.

According to the adhesive sticking apparatus configured as described in the above (14) and the method of sticking an adhesive described in the above (15), the elongated adhesive can be stuck to the object to be stuck while preventing the tip end portion of the elongated adhesive from entering into the through hole of the nozzle unit. Therefore, it is possible to prevent the fluctuation of tension from easily occurring, for example, prevent that the tip end portion of the elongated adhesive enters into the through hole of the nozzle unit and the adhesive cannot be stuck when starting sticking or when cutting after sticking.

### ADVANTAGEOUS EFFECTS OF INVENTION

According to the present invention, an elongated adhesive can be prevented from entering into a nozzle side due to a fluctuation of tension.

The present invention has been briefly described above. Furthermore, details of the present invention will become clearer by reading the detailed description of the invention described below with reference to the accompanying drawings.

### BRIEF DESCRIPTION OF DRAWINGS

[FIG. 1] FIG. 1 is a front view showing a configuration example of a main part of a threadlike adhesive sticking apparatus including an adhesive guiding apparatus of the present invention.
[FIG. 2] FIG. 2 is a longitudinal cross-sectional view showing the main part of the adhesive guiding apparatus in an embodiment of the present invention.
[FIG. 3] FIG. 3 is a longitudinal cross-sectional view showing a configuration example of a nozzle.
[FIG. 4] (a) of FIG. 4 and (b) of FIG. 4 are respectively a longitudinal cross-sectional view and a perspective view showing a configuration example of a top.
[FIG. 5] (a) of FIG. 5 and (b) of FIG. 5 are longitudinal cross-sectional views showing states of the nozzle and a threadlike adhesive before and after movement in a case where no top is present, respectively.
[FIG. 6] (a) of FIG. 6 and (b) of FIG. 6 are longitudinal cross-sectional views showing the states of the nozzle and the threadlike adhesive before and after movement in the case where no top is present, respectively.
[FIG. 7] FIG. 7 is a longitudinal cross-sectional view showing an example of a behavior of the threadlike adhesive in a case where a force is applied with the top present.
[FIG. 8] (a) of FIG. 8 and (b) of FIG. 8 are longitudinal cross-sectional views showing examples of an applied force when the top is movable, and changes in states of the top and the threadlike adhesive.
[FIG. 9] FIG. 9 is a longitudinal cross-sectional view showing a configuration example of a main part of an adhesive guiding apparatus according to Modification-1.
[FIG.10] FIG. 10 is a longitudinal cross-sectional view showing a configuration example of a main part of an adhesive guiding apparatus according to Modification-2.
[FIG. 11] FIG. 11 is a block diagram showing an overview of a configuration of the threadlike adhesive sticking apparatus.
[FIG. 12] (a) of FIG. 12 and (b) of FIG. 12 are longitudinal cross-sectional views each showing a configuration example of the vicinity of a tip end opening of the nozzle.
[FIG. 13] FIG. 13 is a perspective view showing an external appearance of a threadlike adhesive sticking apparatus according to Modification-1.
[FIG. 14] FIG. 14 is a front view showing an open state of the threadlike adhesive sticking apparatus according to Modification-1.
[FIG. 15] FIG. 15 is a front view showing an example of a usage state of the threadlike adhesive sticking apparatus according to Modification-1.
[FIG. 16] FIG. 16 is a front view showing an example of a usage state of a threadlike adhesive sticking apparatus according to Modification-2.
[FIG. 17] FIG. 17 is a perspective view showing a configuration example of a part of the threadlike adhesive.

### DESCRIPTION OF EMBODIMENTS

Specific embodiments related to the present invention will be described below with reference to the drawings.

### <Specific Example of Usage Environment of Adhesive Guiding Apparatus>

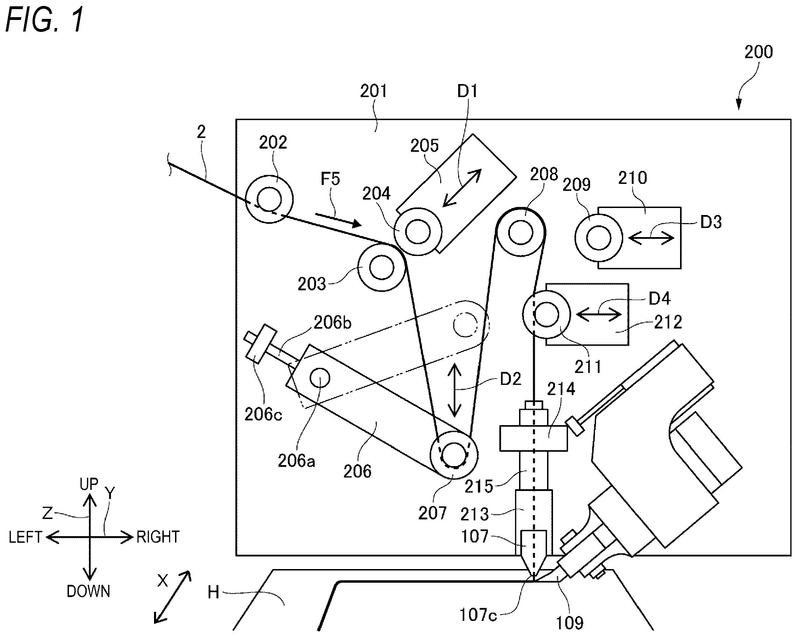

FIG. 1 shows a configuration example of a main part of a threadlike adhesive sticking apparatus 200 including an adhesive guiding apparatus of the present invention.

### -<Overview of Threadlike Adhesive Sticking Apparatus>

The threadlike adhesive sticking apparatus 200 shown in FIG. 1 has a function of automatically performing an operation for continuously sticking an elongated threadlike adhesive 2 to a desired portion on a desired adherend H. Of course, the adhesive guiding apparatus of the present invention can also be used when an operator manually performs a sticking operation of an elongated adhesive such as the threadlike adhesive 2. The adhesive guiding apparatus of the present invention can also be used when sticking the elongated adhesive in the form of a tape, for example, instead of the threadlike adhesive 2.

For example, a flat plate-shaped component is assumed as the adherend H which is an object to be stuck by the threadlike adhesive 2. Of course, a curved component or a component with a complicated shape can also be used as the adherend H. In the example shown in FIG. 1, the adherend H is placed on a movable table integrated with the threadlike adhesive sticking apparatus 200. A position of the movable table can be moved in a front-rear direction along an X-axis.

On the other hand, an attachment plate 201 of the threadlike adhesive sticking apparatus 200 disposed above the adherend H is movable in a left-right direction in FIG. 1 along a Y-axis, and furthermore movable in an up-down direction along a Z-axis. A nozzle 107 for guiding the threadlike adhesive 2 to a position facing the adherend H is disposed at a lower end portion of the attachment plate 201, as shown in FIG. 1.

Therefore, a relative positional relationship between a tip end portion of the nozzle 107 and a sticking location of the adherend H can be adjusted in each of the three (X-, Y-, Z-) axis directions due to the movement of the movable table in the X-axis direction and the movement of the attachment plate 201 in the Y-axis and Z-axis directions.

The threadlike adhesive 2 wound and held in a roll shape is pulled out from a roll and led into the attachment plate 201 from the upper left in FIG. 1. The threadlike adhesive 2 passes through a mechanism of the threadlike adhesive sticking apparatus 200 shown in FIG. 1, is guided to the tip end portion of the nozzle 107, and is positioned at a position facing a surface of the adherend H. Details of the mechanism of the threadlike adhesive sticking apparatus 200 will be described later.

The threadlike adhesive 2 pulled out from a tip end opening 107c of the nozzle 107 is pressed against a sticking location of the adherend H by the tip end portion of the nozzle 107, and sticks to a facing surface of the adherend H due to an adhesive force of the threadlike adhesive 2 itself.

On the other hand, the nozzle 107 has a material and a structure that stick to the threadlike adhesive 2 hard, and thus the nozzle 107 allows the threadlike adhesive 2 to move relative to each other. Therefore, for example, when the attachment plate 201 moves in the Y-axis direction while a tip end of the threadlike adhesive 2 is pressed and stuck to the adherend H, the threadlike adhesive 2 is gradually pulled out from an upstream side due to tension. The pulled out threadlike adhesive 2 sticks to the surface of the adherend H in a linear shape toward the Y-axis direction as the adherend H and the nozzle 107 move relative to each other.

When the movable table moves in the X-axis direction while the tip end of the threadlike adhesive 2 is pressed and stuck to the adherend H, the threadlike adhesive 2 is also gradually pulled out from the upstream side due to the tension. The pulled out threadlike adhesive 2 sticks to the surface of the adherend H in, for example, a linear shape toward the X-axis direction as the adherend H and the nozzle 107 move relative to each other.

The attachment plate 201 and the nozzle 107 are movable in the Z-axis direction. Therefore, even if the surface of the adherend H is not planar, a tip end position of the nozzle 107 moves in the Z-axis direction in accordance with a surface shape of the adherend H, so that the nozzle 107 can maintain a state in which the threadlike adhesive 2 is pressed against the surface of the adherend H. Therefore, the threadlike adhesive sticking apparatus 200 can continuously stick the threadlike adhesive 2 in accordance with the shape of the adherend H.

When the sticking operation of the threadlike adhesive 2 on an entire desired region of the adherend H ends, it is necessary to cut a rear end portion of the stuck threadlike adhesive 2 and separate the rear end portion from the threadlike adhesive sticking apparatus 200. By driving an air scissor 109 shown in FIG. 1, the threadlike adhesive 2 can be cut at a portion between the surface of the adherend H and the tip end opening 107c of the nozzle 107.

At the time of the cutting, a force on a tip end side of the threadlike adhesive 2 stuck to the adherend H is released, and thus a sudden change in tension occurs in the threadlike adhesive 2. As a result, a situation is likely to occur in which the tip end side of the threadlike adhesive 2 enters into the nozzle 107, and entanglement of the threadlike adhesive 2 occurs, and thus the threadlike adhesive 2 cannot be automatically pulled out from the nozzle 107 in a next sticking operation.

On the other hand, when cutting the threadlike adhesive 2 by using the air scissor 109, if the threadlike adhesive 2 is held between a cut portion thereof and the tip end opening 107c by using, for example, a suitable chuck, it is possible to prevent a sudden change in tension in the cut threadlike adhesive 2. That is, it is possible to prevent the threadlike adhesive 2 from entering into the nozzle 107.

However, when the chuck is used for cutting, a special space for disposing the chuck must be secured between the cut portion of the threadlike adhesive 2 and the tip end opening 107c, and it is inevitable that a distance between the cut portion of the threadlike adhesive 2 and the tip end opening 107c becomes long.

By the way, when the sticking operation of the threadlike adhesive 2 is performed, unused waste regions are formed at the front and rear end portions of the threadlike adhesive 2 stuck on the adherend H. A length of each of the waste regions, that is, an extra length becomes longer if the chuck is disposed on a tip end side of the nozzle 107. Therefore, if a priority is given to reducing the extra length generated at the time of sticking the threadlike adhesive 2, the chuck cannot be disposed at the tip end side of the nozzle 107.

Therefore, in the threadlike adhesive sticking apparatus 200 shown in FIG. 1, when the threadlike adhesive 2 is cut by the air scissor 109, the threadlike adhesive 2 is gripped at a portion of a roller 208 located an upstream side of the nozzle 107 to inhibit a behavior of the threadlike adhesive 2 that occurs due to a fluctuation of tension during cutting.

However, when the threadlike adhesive 2 is cut, the threadlike adhesive 2 is held at the roller 208, and thus further improvement is required to stop the movement of the threadlike adhesive 2 that occurs in a section between the roller 208 and a tip end of the nozzle 107 due to the change in tension. If the behavior countermeasure is insufficient, as the tension changes during cutting, the tip end side of the threadlike adhesive 2 flows backward toward the upstream side, and the threadlike adhesive 2 enters into the nozzle 107, making the next automatic sticking operation difficult.

The adhesive guiding apparatus of the present embodiment has a function for preventing a behavior such that along with the change in tension generated when the threadlike adhesive 2 is cut or the like, the tip end side of the cut threadlike adhesive 2 flows backward toward the upstream and enters into the nozzle 107 to become an abnormal state. Due to this function, the threadlike adhesive sticking apparatus 200 can easily repeat the operation of sticking the threadlike adhesive 2 continuously, and the operation can be easily automated. It is unnecessary to hold the threadlike adhesive 2 at the tip end side of the nozzle 107 when cutting the threadlike adhesive 2, and thus an increase of the extra length can be prevented from occurring along with the sticking operation of the threadlike adhesive 2.

### <Description of Main Part of Adhesive Guiding Apparatus>

### -<Configuration Example-1 of Adhesive Guiding Apparatus>

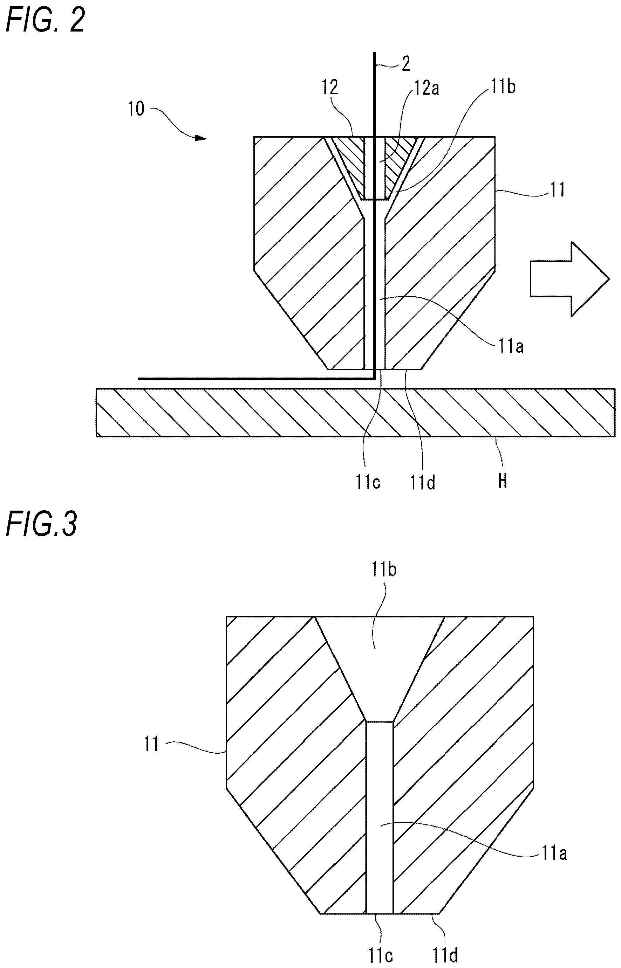

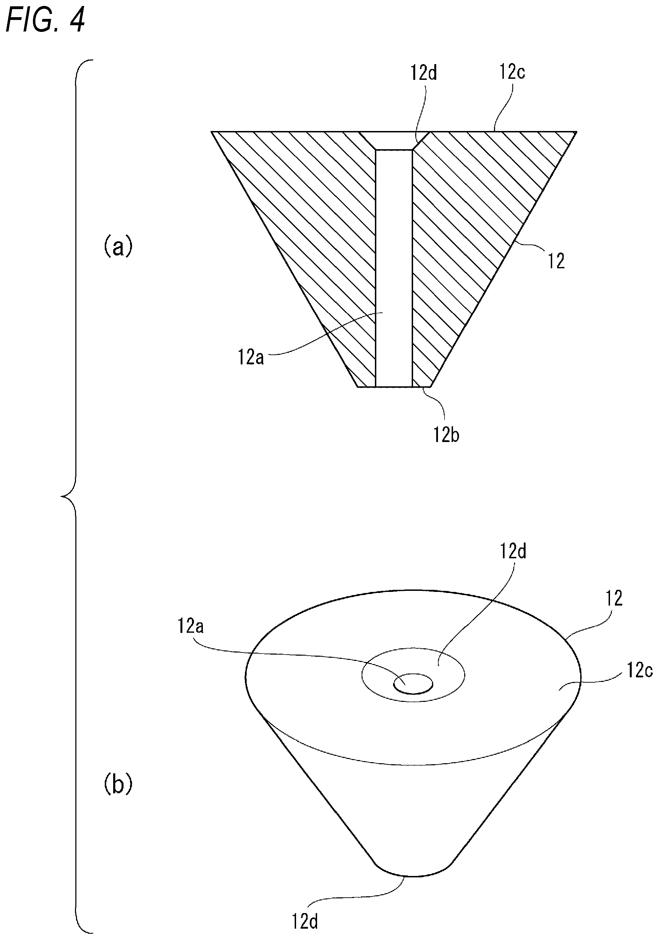

FIG. 2 shows a configuration of a main part of an adhesive guiding apparatus 10 that can be mounted on the threadlike adhesive sticking apparatus 200 shown in FIG. 1. FIG. 3 shows a cross-sectional configuration of a nozzle 11 included in the adhesive guiding apparatus 10. FIG. 4 shows a top 12 included in the adhesive guiding apparatus 10. (a) of FIG. 4 is a longitudinal cross-sectional view, and (b) of FIG. 4 is a perspective view.

The adhesive guiding apparatus 10 shown in FIG. 2 includes the nozzle 11 and the top 12. The nozzle 11 shown in FIG. 2 can be attached to the threadlike adhesive sticking apparatus 200 instead of the nozzle 107 in FIG. 1.

That is, the adhesive guiding apparatus 10 shown in FIG. 2 can guide the threadlike adhesive 2 fed out by the threadlike adhesive sticking apparatus 200 to the position facing the adherend H by using the nozzle 11. If the threadlike adhesive 2 pulled out from a tip end opening 11c of the nozzle 11 is pressed against the adherend H with a tip end 11d of the nozzle 11, the threadlike adhesive 2 can be stuck to a desired portion of the adherend H due to the adhesive force of the threadlike adhesive 2. The tip end 11d of the nozzle 11 has a material and a structure that are difficult to be stuck by the threadlike adhesive 2, and thus it is possible to move the nozzle 11 and/or the adherend H while pressing the threadlike adhesive 2 against the adherend H with the tip end 11d to change the relative positional relationship thereof and move the sticking position. Along with the relative movement, the tension is applied to the threadlike adhesive 2 from a tip end 11d side of the nozzle 11, and the pulled out threadlike adhesive 2 sticks to the adherend H continuously.

As shown in FIG. 3, the nozzle 11 has a through hole 11a guiding the threadlike adhesive 2 in a desired movement path in a center. The through hole 11a passes through the nozzle 11 in the up-down direction from an upper portion to the tip end opening 11c, and is formed into a cylindrical shape with a constant diameter except for the upper portion. A diameter of the through hole 11a is, for example, 1 mm, and is sufficiently larger than an external thickness of the threadlike adhesive 2.

As the material of the nozzle 11, for example, resin such as poly tetra fluoro ethylene (PTFE) can be used. A peripheral wall of the through hole 11a of the nozzle 11 has a structure that is difficult to be stuck by the threadlike adhesive 2.

A top receiving groove 11b formed in a funnel shape is disposed in the upper portion of the nozzle 11. The top receiving groove 11b communicates with the through hole 11a. That is, the top receiving groove 11b is formed in a shape that expands from the upper portion of the through hole 11a toward an upper surface of the nozzle 11 along a slope having a constant inclination angle.

On the other hand, as shown in (a) of FIG. 4 and (b) of FIG. 4, the top 12 of the adhesive guiding apparatus 10 has an approximately inverted cone shape or an inverted truncated cone shape. That is, an outer peripheral surface of the top 12 is formed to expand at a constant inclination from a lower end surface 12b toward an upper end surface 12c. An apex angle of the cone of the top 12 is, for example, 60 degrees. An outer shape of the top 12 is formed such that the shape and a dimension substantially match those of the top receiving groove 11b of the nozzle 11 shown in FIG. 3. The top 12 is disposed directly above the nozzle 11.

The top 12 has a through hole 12a with a constant diameter in the center. A shape of the through hole 12a is approximately a cylindrical shape. In the present embodiment, the diameter of the through hole 12a is formed to be slightly larger than the diameter of the through hole 11a of the nozzle 11. An upper portion of the through hole 12a has an upper opening portion 12d whose diameter gradually increases upward, making it easy to insert the threadlike adhesive 2 into the through hole 12a. For example, stainless steel such as SUS304 can be used as a material of the top 12.

The top 12 is formed in a shape that can fit into the top receiving groove 11b of the nozzle 11, but the top 12 and the top receiving groove 11b are not connected to each other, and thus the top 12 can move freely relative to the nozzle 11. However, a movable range of the top 12 is restricted to some extent, and the top 12 is prevented from falling off from the nozzle 11. This is because in the threadlike adhesive sticking apparatus 200, the nozzle 11 is fixed to a slider 213, and the top 12 has a shape that can be fitted into the top receiving groove 11b and has a weight, and thus the top 12 floating from the nozzle 11 moves back to the top receiving groove 11b. In order to restrict the movable range of the top 12, the top 12 may be surrounded by a support member or a cover (not shown).

In the present embodiment, a peripheral wall of the through hole 12a of the top 12 has a property that the peripheral wall sticks to the threadlike adhesive 2 more easily or slips harder than the peripheral wall of the through hole 11a. Accordingly, when a force is pushed in an opposite direction from the tip end side of the threadlike adhesive 2, or when the tension applied to the threadlike adhesive 2 changes, it becomes possible to inhibit a behavior in which the tip end of the threadlike adhesive 2 flows backward and enters into the through hole 11a of the nozzle 11.

### -<Specific Example of Adhesive Force of Threadlike Adhesive 2 to Top 12 and Nozzle 11>

The adhesive force of the threadlike adhesive 2 to the top 12 and the nozzle 11 was measured by the following method. A sample piece was prepared by lining a double-sided tape (NO. 5000NS, manufactured by Nitto Denko Corporation) having a width of 3 mm with a polyethylene terephthalate (PET) film having a thickness of 25 µm. Next, in an environment of 23°C and 50% RH, an adhesive surface of the sample piece was pressed and stuck to upper surfaces of the top 12 and the nozzle 11, respectively, to prepare measurement samples. The pressing and sticking was performed by moving a 2 kg roller back and forth once. After each of the measurement samples prepared in this way was left in the environment of 23°C and 50% RH for 30 minutes, a tensile tester was used under conditions of a tensile speed of 50 mm/min and a peeling angle of 180 degrees to measure a peeling strength [N/3 mm].

A result of measurement using the above measurement method showed that the adhesive force to the stainless steel top 12 was 1.47 N/3 mm, the adhesive force to the PTFE nozzle 11 was 0.72 N/3 mm, and the threadlike adhesive 2 was more easily to stick to the top 12 than to the nozzle 11.

### -<Specific Example of Behavior Occurring in Threadlike Adhesive 2>

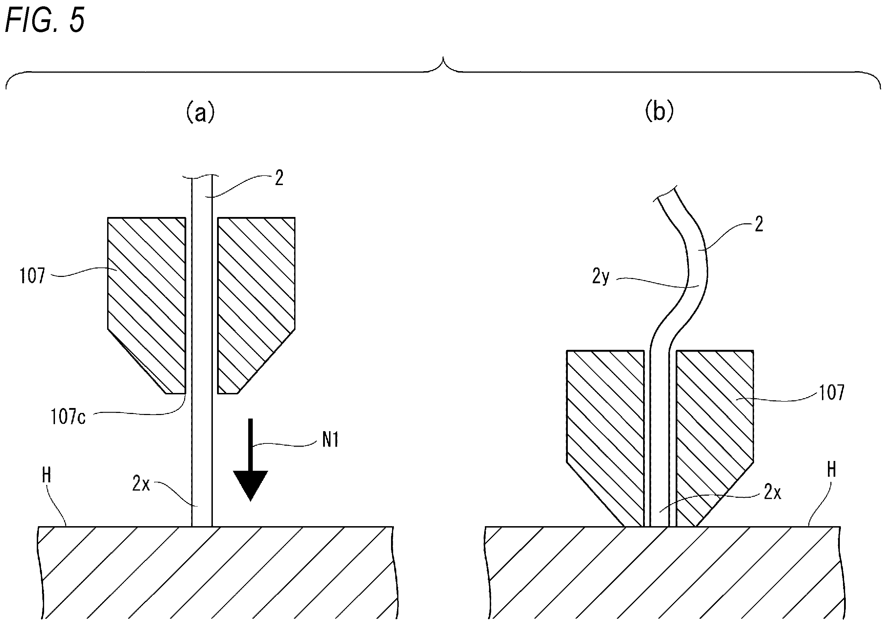

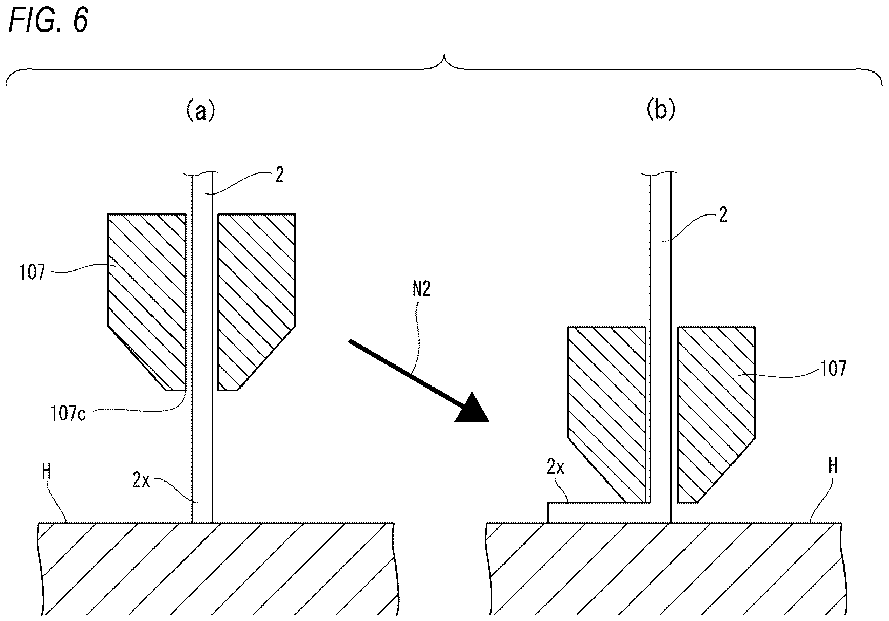

FIGs. 5 and 6 each show an example of the behavior of the threadlike adhesive 2 that occurs when the tip end of the threadlike adhesive 2 is first stuck to the adherend H in the threadlike adhesive sticking apparatus 200 shown in FIG. 1.

In order to stick the threadlike adhesive 2 to the adherend H, it is necessary to press the threadlike adhesive 2 against the adherend H to stick the threadlike adhesive 2 to the adherend H from an initial state in which the tip end of the threadlike adhesive 2 is in contact with the surface of the adherend H as shown in (a) of FIG. 5. Therefore, for example, as shown in (a) of FIG. 5, the nozzle 107 is moved in a direction approaching the adherend H, for example, in a vertical direction N1.

Along with this operation, a force in an opposite direction to the vertical direction N1 is applied to a tip end 2x of the threadlike adhesive 2, and thus the tip end 2x of the threadlike adhesive 2 is pushed to a tip end opening 107c side. In this case, as shown in (b) of FIG. 5, deformation due to flexure occurs in the threadlike adhesive 2 at a portion 2y on the upstream side of the nozzle 107. If such a behavior occurs in the threadlike adhesive 2, a sufficient pressing force is not applied between the tip end 2x of the threadlike adhesive 2 and the adherend H, and thus there is a high possibility that the sticking at this point, that is, an initial sticking position fails.

In order to reduce the sticking failure as described above, the nozzle 107 may be moved in an oblique direction N2 shown in (a) of FIG. 6, for example. For example, the nozzle 107 can be moved in the oblique direction N2 by simultaneously moving the nozzle 107 in the vertical direction and in the left-right direction. In this case, the direction of the force applied to the tip end 2x of the threadlike adhesive 2 during movement is also the oblique direction. Therefore, it becomes possible to prevent the tip end 2x of the threadlike adhesive 2 from being pushed to the tip end opening 107c side, and it becomes easy to press and stick the tip end 2x of the threadlike adhesive 2 to the adherend H as shown in (b) of FIG. 6.

However, even if the nozzle 107 is moved in the oblique direction N2 as shown in (a) of FIG. 6 as a behavior countermeasure, it is difficult to completely prevent a behavior such as flexure from occurring on an upstream side of the tip end 2x of the threadlike adhesive 2. When a rear end of the stuck threadlike adhesive 2 is cut by the air scissor 109 or the like, the sudden fluctuation of tension occurs unless the threadlike adhesive 2 is held in the vicinity of the cut portion, and as a result, the behavior such as flexure or deformation occurs on the upstream side of the cut threadlike adhesive 2.

### -<Behavior of Threadlike Adhesive 2 or the like in Adhesive Guiding Apparatus 10>

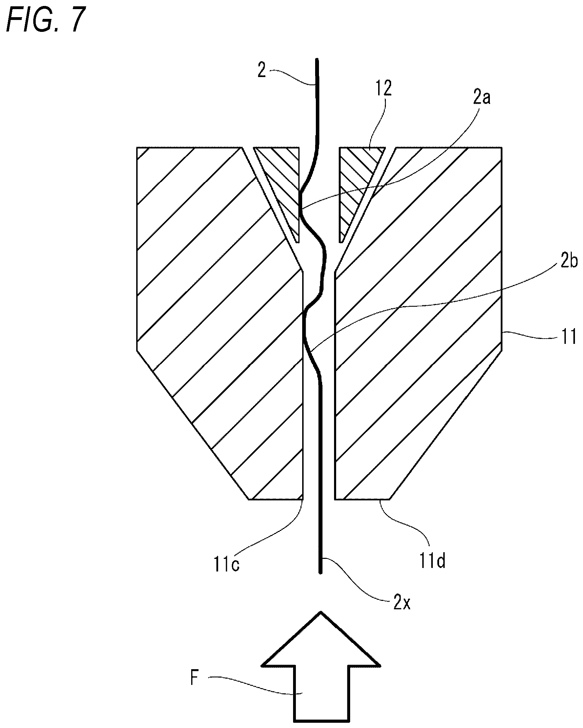

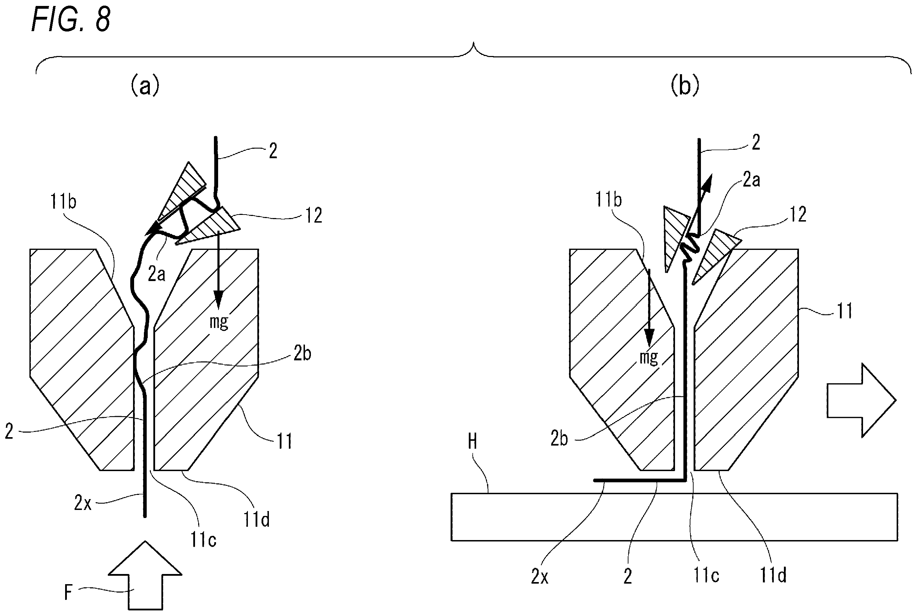

FIG. 7, (a) of FIG. 8, and (b) of FIG. 8 each show an example of the behavior occurring in the threadlike adhesive 2 or the like in the threadlike adhesive sticking apparatus 200 employing the adhesive guiding apparatus 10 of FIG. 2. It is confirmed that situations shown in FIG. 7, (a) of FIG. 8, and (b) of FIG. 8 actually occur in the threadlike adhesive sticking apparatus 200 manufactured as a prototype.

### --<Description of Behavior Shown in FIG. 7>

A force F in a direction toward the tip end opening 11c of the nozzle 11 is applied to the tip end 2x of the threadlike adhesive 2 as indicated by an arrow shown in FIG. 7 due to the movement of the nozzle 11 when sticking the threadlike adhesive 2 for the first time, or due to the change in tension when cutting the threadlike adhesive 2.

The threadlike adhesive 2 is threadlike and easily flexed, and thus deformation portions 2a and 2b are generated at the upstream side of the tip end 2x due to the flexure (bending) that occurs in the threadlike adhesive 2 under the influence of the force F.

Here, the peripheral wall of the through hole 12a of the top 12 sticks to the threadlike adhesive 2 more easily than that of the through hole 11a of the nozzle 11, and thus it is considered that the deformation portion 2a of the threadlike adhesive 2 sticks to the top 12 with a stronger force than the deformation portion 2b.

A resistance force is generated when the deformation portion 2a of the threadlike adhesive 2 sticks to the top 12, and the flowback of the threadlike adhesive 2 toward the upstream direction is obstructed by the resistance force of the deformation portion 2a. Therefore, before the tip end 2x of the threadlike adhesive 2 enters into the through hole 11a from the tip end opening 11c, the flowback of the threadlike adhesive 2 is prevented.

The resistance force applied to the threadlike adhesive 2 from the top 12 generates a force that presses the tip end 2x of the threadlike adhesive 2 against the adherend H, and the tip end 2x of the threadlike adhesive 2 sticks to the adherend H. Therefore, it is possible to prevent the failure of sticking at the initial sticking position of the threadlike adhesive 2.

### --<Description of Behavior Shown in (a) of FIG. 8>

The force F in a direction toward the tip end opening 11c of the nozzle 11 is applied to the tip end 2x of the threadlike adhesive 2 as indicated by an arrow shown in (a) of FIG. 8 due to the movement of the nozzle 11 when sticking the threadlike adhesive 2 for the first time, or due to the change in tension when cutting the threadlike adhesive 2.

The threadlike adhesive 2 is threadlike and easily flexed, and thus the deformation portions 2a and 2b are generated at the upstream side of the tip end 2x due to the flexure that occurs in the threadlike adhesive 2 under the influence of the force F.

Here, the peripheral wall of the through hole 12a of the top 12 sticks to the threadlike adhesive 2 more easily than that of the through hole 11a of the nozzle 11, and thus it is considered that the deformation portion 2a of the threadlike adhesive 2 sticks to the top 12 with a stronger force than the deformation portion 2b.

A resistance force is generated when the deformation portion 2a of the threadlike adhesive 2 sticks to the top 12. The top 12 can freely move with respect to the top receiving groove 11b, and thus the top 12 moves upward against the gravity mg of the top 12 under the influence of the force F transmitted from the deformation portion 2a of the threadlike adhesive 2 to the top 12. Accordingly, as shown in (a) of FIG. 8, the top 12 moves to an upper position out of the top receiving groove 11b and stands still inclined.

The top 12 moves to the position as in (a) of FIG. 8 in response to the force F applied to the tip end 2x of the threadlike adhesive 2, so that it is possible to provide an appropriate resistance force against the movement of the threadlike adhesive 2 flowing backward in the upstream direction. Accordingly, the deformation portion 2b can be prevented from sticking to the nozzle 11, and the tip end 2x of the threadlike adhesive 2 can be prevented from entering into the through hole 11a from the tip end opening 11c.

### --<Description of Behavior Shown in (b) of FIG. 8>

By bringing the nozzle 11 close to the adherend H while receiving the resistance force from the top 12, the state shown in (a) of FIG. 8 can be shifted to a state in which the tip end 11d of the nozzle 11 presses the tip end 2x of the threadlike adhesive 2 against the adherend H. Furthermore, by moving the nozzle 11 in the left-right direction as indicated by an arrow shown in (b) of FIG. 8, the tension can be applied to the threadlike adhesive 2 so as to pull out the threadlike adhesive 2 from the tip end 2x side.

The tension eliminates the bending of the deformation portion 2b as shown in (b) of FIG. 8. The top 12 moves in a manner of being pulled back to a predetermined position within the top receiving groove 11b under the influence of the tension applied to the threadlike adhesive 2 from the tip end 2x side and the gravity mg of the top 12. At the same time, when the tension applied to the threadlike adhesive 2 from the tip end 2x side becomes larger than the sticking force between the deformation portion 2a and the top 12, the deformation portion 2a is peeled off from the top 12, and the bending of the threadlike adhesive 2 is eliminated.

Therefore, the tip end 2x of the threadlike adhesive 2 reliably sticks to the adherend H as shown in (b) of FIG. 8, and it is possible to prevent the failure of sticking at the initial sticking position of the threadlike adhesive 2.

An apparatus configuration in which the top 12 is fixed in the top receiving groove 11b of the nozzle 11 in advance is also considered. However, it is considered to be easier to appropriately adjust the resistance force applied to the threadlike adhesive 2 with respect to the force F applied to the tip end 2x in the case where the top 12 can move freely within a predetermined range.

According to an experiment, in the threadlike adhesive sticking apparatus 200 when the top 12 moves, when the top 12 is fixed, and when the top 12 does not exist, probabilities of successful sticking at the initial sticking position are 100%, 70%, and 60%. That is, a best result is obtained when the movable top 12 is used as in the adhesive guiding apparatus 10 shown in FIG. 2. A weight of the top 12 used in this experiment is 1.7178 g, the diameter of the through hole 12a is 1.0 mm, and a height from the lower end surface 12b to the upper end surface 12c is 7 mm.

When the weight of the movable top 12 is changed to 1.8481 g and the diameter of the through hole 12a is changed to 0.7 mm, the probability of successful sticking is also 100%. When the diameter of the through hole 12a is changed to 1.5 mm and 2.0 mm, and the weight is changed to 1.7624 g and 1.6696 g, respectively, the respective probabilities of success are 70% and 60%. On the other hand, when the height is changed to 5 mm and the weight is changed to 0.8130 g, and when the material is changed to PTFE and the weight is changed to 0.4677 g, the probabilities of success are 70% and 40%, respectively. The probability of successful sticking when the top 12 is not used is 60%. From these results, it can be said that the probability of successful sticking is high when the top 12 has a certain weight and the diameter of the through hole 12a is large enough to allow insertion of the threadlike adhesive 2 and is not too large. Specifically, when the through hole 11a of the nozzle 11 has a diameter of 1 mm, the through hole 12a of the top 12 preferably has a diameter of 0.7 mm to 1.5 mm. Here, the diameter of the through hole 11a of the nozzle 11 is set appropriately with respect to the diameter of the threadlike adhesive 2 as will be described later, and thus the diameter of the through hole 11a of the nozzle 11 is appropriately set with respect to the diameter of the threadlike adhesive 2. In this way, by setting a ratio of the through hole 11a of the nozzle 11 to the through hole 12a of the top 12 to 1:0.7 to 1.5, it is possible to prevent that the deformation portion 2a or the like generated in the threadlike adhesive 2 is stuck to the peripheral wall of the through hole 12a, and the tip end 2x enters into the through hole 11a. Therefore, the probability of successful sticking can be increased.

In the threadlike adhesive sticking apparatus 200 in FIG. 1, after the sticking operation ends, the threadlike adhesive 2 is cut in the vicinity of the tip end opening 107c by using the air scissor 109, and then by moving a roller 211 shown in FIG. 1 a little to the left, the threadlike adhesive 2 can be pulled up to the upstream side. Accordingly, the extra length of the threadlike adhesive 2 protruding downward from the tip end opening 107c of the nozzle 107 can be reduced.

In the case of the threadlike adhesive sticking apparatus 200 employing the adhesive guiding apparatus 10 shown in FIG. 2, when the roller 211 moves to the left and pulls up the threadlike adhesive 2 to the upstream side, the threadlike adhesive 2 also moves obliquely upward. Therefore, the top 12 sticks to the threadlike adhesive 2 and applies the tension, thereby restricting the movement of the threadlike adhesive 2.

### -<Configuration Example-2 of Adhesive Guiding Apparatus>

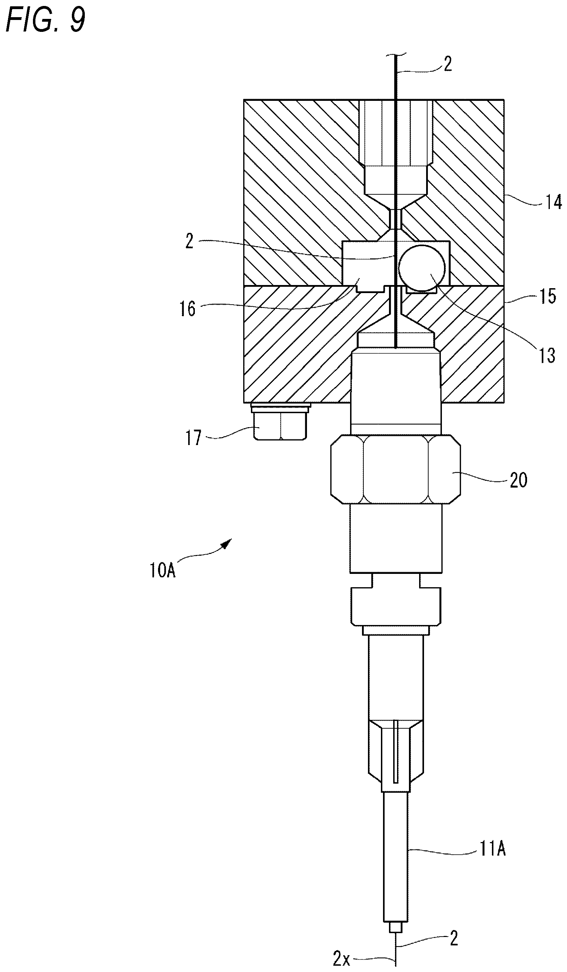

FIG. 9 shows a configuration of a main part of an adhesive guiding apparatus 10A that can be mounted on the threadlike adhesive sticking apparatus 200 shown in FIG. 1.

The adhesive guiding apparatus 10A shown in FIG. 9 includes a sphere 13 that has a function of restricting the movement of the threadlike adhesive 2 in the backflow direction. The sphere 13 is made of the same material as the top 12, for example, and a surface of the sphere 13 has a material and a structure that stick to the threadlike adhesive 2 more easily or slip harder than the nozzle 11A.

The sphere 13 is disposed in a sphere holding space 16 formed at a portion sandwiched between an upper cover member 14 and a lower cover member 15 disposed above and below, and is supported in a freely rotatable state inside the sphere holding space 16. A movable range of the sphere 13 is restricted such that any portion of the surface of the sphere 13 is always held in a position adjacent to the path of the threadlike adhesive 2. A plurality of spheres 13 may be disposed in the sphere holding space 16.

The upper cover member 14 and the lower cover member 15 are fixed with a bolt 17 and are integrated. Therefore, for example, even if the adhesive guiding apparatus 10A is disposed in a horizontal direction or upside down, the sphere 13 does not fall out of the sphere holding space 16. Therefore, even when the adherend H is disposed in various directions, it is possible to stick the threadlike adhesive 2 to a desired portion by using the threadlike adhesive sticking apparatus 200 including the adhesive guiding apparatus 10A.

A nozzle 11A included in the adhesive guiding apparatus 10A shown in FIG. 9 is formed in a narrower shape than the nozzle 11 shown in FIG. 2. The nozzle 11A is connected to the lower cover member 15 via a nozzle coupling unit 20. The nozzle coupling unit 20 includes a mechanism that allows the nozzle 11A to be attached and detached. Therefore, it is possible to replace the nozzle 11A connected to the nozzle coupling unit 20 or to switch a type of a nozzle to be used.

Similarly to the nozzle 11 described above, the nozzle 11A has the through hole 11a through which the threadlike adhesive 2 can pass in the center. The through hole 11a communicates with the sphere holding space 16 via the inside of the nozzle coupling unit 20 and the lower cover member 15. Through holes for guiding the threadlike adhesive 2 are formed in the nozzle coupling unit 20, the upper cover member 14, and the lower cover member 15, respectively.

The adhesive guiding apparatus 10A shown in FIG. 9 can be attached to the threadlike adhesive sticking apparatus 200 as a substitute for the nozzle 107 shown in FIG. 1.

In the threadlike adhesive sticking apparatus 200 employing the adhesive guiding apparatus 10A shown in FIG. 9, the sphere 13 implements the same function as the top 12 in the adhesive guiding apparatus 10 described above. For example, when bringing a tip end side of the nozzle 11A close to the adherend H, if a force is applied from the tip end 2x side of the threadlike adhesive 2 toward the upstream side, the surface of the sphere 13 sticks to the threadlike adhesive 2 passing through a position adjacent to the surface, thereby restricting the backflow movement of the threadlike adhesive 2. The backflow can be inhibited even when the tension of the threadlike adhesive 2 changes due to the cutting of the threadlike adhesive 2.

Therefore, the tip end 2x of the threadlike adhesive 2 can be prevented from entering into the nozzle 11A, and adverse effects such as deformation due to the flexure of the threadlike adhesive 2 flowing backward can be reduced. Therefore, the automatic sticking operation and the manual sticking operation of the threadlike adhesive 2 can be carried out continuously and efficiently.

The top 12 shown in FIG. 2 may be disposed instead of the sphere 13 shown in FIG. 9. When the top 12 is used, the top 12 is disposed in the center of the sphere holding space 16 such that the threadlike adhesive 2 can pass through the through hole 12a of the top 12, and a shape of the sphere holding space 16 is changed to allow the same movement as the top 12 of the adhesive guiding apparatus 10.

### -<Configuration Example-3 of Adhesive Guiding Apparatus>

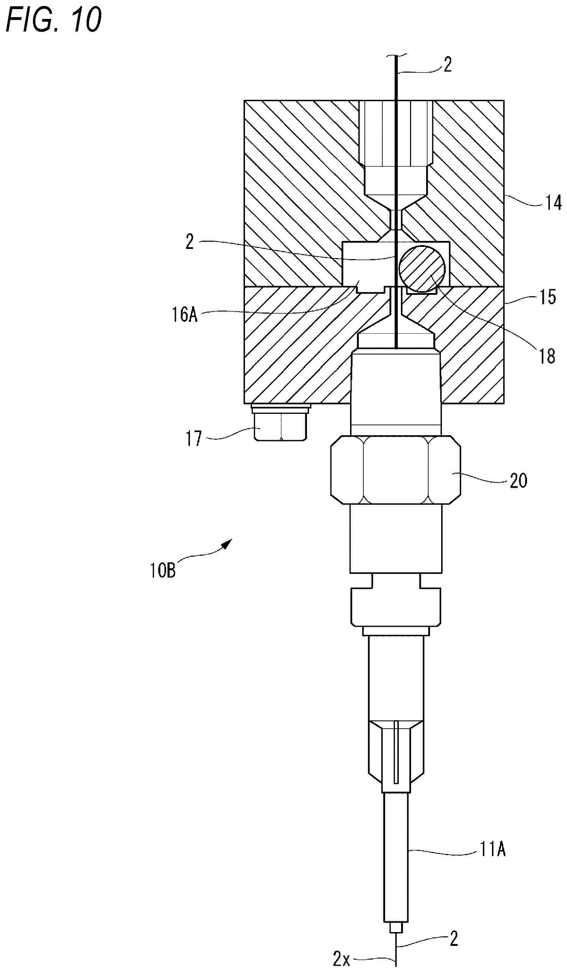

FIG. 10 shows a configuration of a main part of an adhesive guiding apparatus 10B that can be mounted on the threadlike adhesive sticking apparatus 200 shown in FIG. 1. The adhesive guiding apparatus 10B shown in FIG. 10 is a modification of the adhesive guiding apparatus 10A shown in FIG. 9, and the only difference in the configuration is that a rod-shaped body 18 is used instead of the sphere 13.

In the adhesive guiding apparatus 10B shown in FIG. 10, the rod-shaped body 18 has a cylindrical shape, and the rod-shaped body 18 is disposed horizontally within a rod-shaped body holding space 16A such that a part of a peripheral surface of the cylinder is disposed at a position adjacent to a guiding path for the threadlike adhesive 2. The peripheral surface of the rod-shaped body 18 is configured to easily stick to the threadlike adhesive 2 or configured to slip hard with respect to the threadlike adhesive 2.

In the present embodiment, the rod-shaped body 18 is supported by the upper cover member 14 in a rotatable state about a central axis of the rod-shaped body 18. The rod-shaped body 18 may be fixed to the upper cover member 14 or the lower cover member 15.

In the threadlike adhesive sticking apparatus 200 employing the adhesive guiding apparatus 10B shown in FIG. 10, the rod-shaped body 18 implements the same function as the top 12 in the adhesive guiding apparatus 10 described above. For example, when bringing the tip end side of the nozzle 11A close to the adherend H, if a force is applied from the tip end 2x side of the threadlike adhesive 2 toward the upstream side, the peripheral surface of the rod-shaped body 18 sticks to the threadlike adhesive 2 passing through a position adjacent to the peripheral surface, thereby restricting the backflow movement of the threadlike adhesive 2. The backflow can be inhibited even when the tension of the threadlike adhesive 2 changes due to the cutting of the threadlike adhesive 2.

Therefore, the tip end 2x of the threadlike adhesive 2 can be prevented from entering into the nozzle 11A, and adverse effects such as deformation due to the flexure of the threadlike adhesive 2 flowing backward can be reduced. Therefore, the automatic sticking operation and the manual sticking operation of the threadlike adhesive 2 can be carried out continuously and efficiently.

### -<Another Configuration Example of Adhesive Guiding Apparatus>

In the adhesive guiding apparatus 10B shown in FIG. 10, the rod-shaped body 18 is held in the rod-shaped body holding space 16A formed at a position sandwiched between the upper cover member 14 and the lower cover member 15, and the upper cover member 14 and the lower cover member 15 may not be included. For example, in the adhesive guiding apparatus 10 shown in FIG. 2, instead of the top 12, the rod-shaped body 18 may be directly fixed above the nozzle 11 on a front surface of the attachment plate 201.

In the adhesive guiding apparatus 10 shown in FIG. 2, a thread guide may be provided in the top receiving groove 11b instead of the top 12. The guide only needs to have a through hole through which the threadlike adhesive 2 can be inserted, and examples thereof include a tube-shaped guide, a snail guide, a dogtail guide, and a hook guide. The guide only needs to be provided in the vicinity of the nozzle, and by providing the guide within 10 mm from the upper surface of the through hole of the nozzle, preferably directly above, it is possible to prevent the tip end of the threadlike adhesive from entering into the nozzle.

### <Detailed Description of Threadlike Adhesive Sticking Apparatus>

Details of the threadlike adhesive sticking apparatus 200 shown in FIG. 1 will be described below.

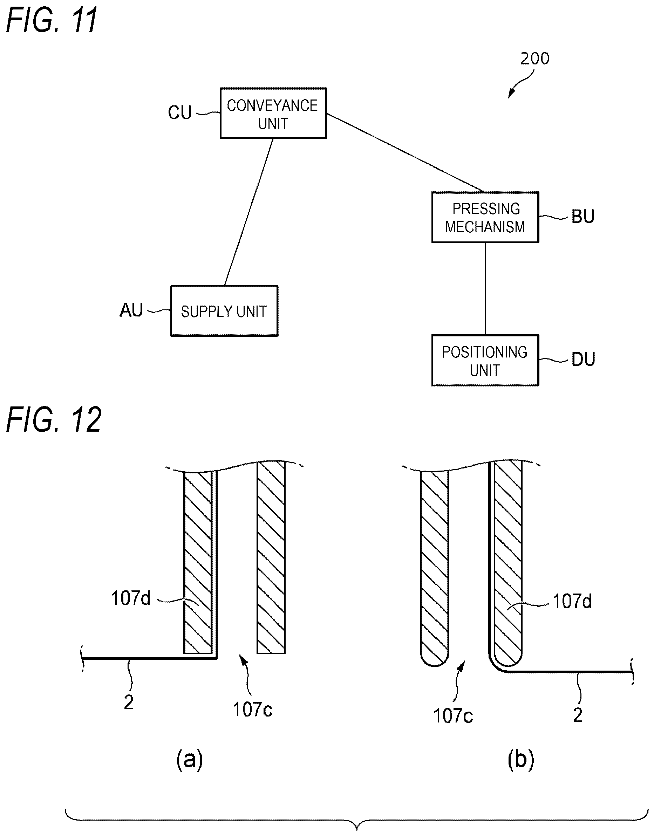

FIG. 11 shows an overall configuration of the threadlike adhesive sticking apparatus 200. The threadlike adhesive sticking apparatus 200 is an apparatus that presses and sticks the threadlike adhesive 2 to an object (adherend), and includes a supply unit AU, a pressing mechanism BU (nozzle), a conveyance unit CU, and a positioning unit DU as shown in FIG. 11 as main components.

The supply unit AU supplies the threadlike adhesive 2 wound in a roll shape. The pressing mechanism BU presses the supplied threadlike adhesive 2 against the adherend. The conveyance unit CU conveys the threadlike adhesive 2 from the supply unit AU to the pressing mechanism BU. The positioning unit DU positions the pressing mechanism BU relative to the object.

The positioning unit DU includes a table disposed on a base and a stage that is slidable on the table along the X-axis direction, that is, the front-rear direction. The object is placed on an upper surface of the stage and mounted by suction or the like. When the stage is moved in the X-axis direction by a driving unit, the object is moved in the X-axis direction. The threadlike adhesive sticking apparatus 200 includes, for example, a pair of support columns erected on left and right sides of the table, and a horizontal arm installed between the pair of support columns along the Y-axis direction, that is, the left-right direction above the pair of support columns.

The supply unit AU includes a winding body and a winding body holding unit. The winding body has a cylindrical shape such as a reel, a paper tube, and a bobbin. The threadlike adhesive 2 obtained by attaching an adhesive to a threadlike core material is wound around an outer peripheral surface of the winding body. The winding body can be formed of a metal, a resin, an easily peelable material, or the like. The winding body holding unit holds the winding body such that movement of the winding body in the front-rear direction is restricted in the vicinity of both ends of the winding body around which the threadlike adhesive 2 is wound, and the winding body is rotatable as the threadlike adhesive 2 is conveyed, in other words, fed out. The threadlike adhesive 2 is an adhesive body obtained by covering a surface of a threadlike core material with an adhesive layer. Details of the threadlike adhesive 2 will be described later. The supply unit AU can sequentially feed out the threadlike adhesive 2 wound in a roll shape from the tip end portion and supply the threadlike adhesive 2 to the object via the conveyance unit CU, the pressing mechanism BU, and the positioning unit DU.

The conveyance unit CU conveys the threadlike adhesive 2 fed out from the winding body of the supply unit AU to the nozzle 107 via, for example, a plurality of rollers 202, 203, 207, 208, and 211 shown in FIG. 1.

Regarding each of the rollers 202, 203, 207, 208, and 211 included in the conveyance unit CU, an outer peripheral surface that comes into contact with the threadlike adhesive 2 is a non-adhesive surface. That is, the outer peripheral surface is formed of, for example, at least one of a fluorine resin, a silicone resin, and a polyolefin resin. Alternatively, at least the outer peripheral surface of each roller in contact with the threadlike adhesive 2 is subjected to a non-adhesive treatment by, for example, at least one of fluorine coating, silicone coating, long-chain alkyl coating, and Tosical (registered trademark) coating.

The treatment by fluorine coating includes a treatment by a fluorine resin heat-shrinkable tube and a fluorine resin fabric sheet. Alternatively, at least the outer peripheral surface of each roller in contact with the threadlike adhesive 2 may be subjected to various non-adhesive treatments on the base material. For example, the base material may be uneven by blasting, and concave portions may be coated with a non-adhesive substance, or the base material may be treated with polyether ether ketone (PEEK) coating, Biceram, fiber reinforced plastics (FRP) lining, ultrahigh molecular polyester (PE) lining, or the like. Fluorine composite electroless nickel plating means that fine particles of the fluorine resin are dispersed and co-deposited in an electroless nickel plating film. Biceram means fluorine resin coating containing micronized ceramic particles.

The pressing mechanism BU includes, for example, the nozzle 107, the slider 213, a fixing unit 214, and a spring 215 shown in FIG. 1. The pressing mechanism BU can press the threadlike adhesive 2 fed out from a tip end 107d of the nozzle 107 to the adherend H with the tip end 107d, and can stick the threadlike adhesive 2 to the adherend H by the pressing force.

A shape of the tip end opening 107c of the nozzle 107 is preferably a circular shape or a polygonal shape having five or more corners. Accordingly, an entire periphery or a plurality of optional locations of the tip end opening 107c function as the pressing unit that presses the threadlike adhesive 2 against the object. Therefore, it is possible to stick the threadlike adhesive while moving the nozzle 107 in a plurality of optional directions without using a roller or the like as the pressing unit. Therefore, it is possible to prevent a problem that a sticking accuracy is poor due to the movement of the adhesive within a width of a roller, and the adhesive is detached from the roller depending on a sticking path in a case where the adhesive is pressed by the roller, and thus it is possible to accurately stick the threadlike adhesive.

A hole diameter of the through hole of the nozzle 107 in the path through which the threadlike adhesive 2 passes is preferably 0.7 mm to 1 mm when the threadlike adhesive 2 has a diameter of 0.45 mm, that is, a width of 0.6 mm when compressed to about 0.3 MPa. When the hole diameter of the nozzle 107 is smaller than 0.7 mm, an area of the threadlike adhesive 2 in contact with the inside of the nozzle 107 becomes large, and thus the threadlike adhesive 2 does not stick to the adherend. On the other hand, when the hole diameter of the nozzle 107 exceeds 1 mm and is too large, the threadlike adhesive 2 is moved inside the nozzle 107, and thus a sticking speed does not increase and the sticking accuracy deteriorates. Therefore, a ratio of the diameter of the threadlike adhesive 2 to the hole diameter of the nozzle 107 is preferably 0.45:0.7 to 1.

The nozzle 107 presses the threadlike adhesive 2 against the object while the tip end opening 107c comes into contact with and slides on an adhesive surface of the threadlike adhesive 2. Specifically, the tip end 107d of the nozzle 107 may be formed of at least one of a fluorine resin, a silicone resin, and a polyolefin resin. Alternatively, the tip end 107d of the nozzle 107 is treated by at least one of fluorine coating, silicone coating, or long-chain alkyl coating. Alternatively, various slidability improving processes described below are performed. The treatment by fluorine coating includes a treatment by a fluorine resin heat-shrinkable tube and a fluorine resin fabric sheet.

The tip end portion of the nozzle 107 may be subjected to various slidability improving processes on the base material. For example, the base material may be treated with polyether ether ketone (PEEK) coating, fluorine composite electroless nickel plating (in which fine particles of a fluorine resin are dispersed and co-deposited in an electroless nickel plating film), Biceram (fluorine resin coating containing micronized ceramic particles), fiber reinforced plastics (FRP) lining, ultrahigh molecular polyester (PE) lining, or the like. Accordingly, the threadlike adhesive 2 can be smoothly stuck to the object.

When the nozzle 107 in contact with the adhesive surface of the threadlike adhesive 2 is not hardly adhesive, it is preferable that a dynamic friction force between the tip end 107d coated/treated for improving slidability and the adhesive surface is 3 N/mm or less. In a case where a tube, which is formed of a hardly adhesive resin, is inserted into the nozzle 107, it is preferable that a dynamic friction force between the lower side opening of the tube and the adhesive surface of the threadlike adhesive 2 is 3 N/mm or less. When the nozzle 107 itself is formed of a hardly adhesive resin such as PTFE, that is, silicone and olefin, a dynamic friction force between the tip end opening 107c and the adhesive surface of the threadlike adhesive 2 is preferably 3 N/mm or less.

In this way, due to a shape of the tip end portion of the nozzle 107 and a material/surface treatment, the tip end portion of the nozzle 107 in contact with the adhesive surface of the threadlike adhesive 2 has a low frictional force with respect to the adhesive surface. In addition, since the tip end portion of the nozzle 107 is formed of a material with reduced unevenness or is subjected to a surface treatment, it is possible to inhibit occurrence of scraping or the like when the soft threadlike adhesive 2 slides thereon. Therefore, the threadlike adhesive 2 can be smoothly stuck.

Since the tip end portion of the nozzle 107 in the present embodiment has a dynamic friction force of 3 N/mm or less with respect to the adhesive surface of the threadlike adhesive 2, the threadlike adhesive 2 can be smoothly stuck. In addition, the dynamic friction force between the tip end portion of the nozzle 107 and the adhesive surface of the threadlike adhesive 2 is preferably 1 N/mm or less. The dynamic friction force between the tip end portion of the nozzle and the adhesive surface of the threadlike adhesive 2 is 3 N/mm or less, and not limited in the case where the width (thickness) of the threadlike adhesive 2 pressed against the tip end of the nozzle is 0.45 mm, and also in the case where the width (thickness) of the threadlike adhesive 2 pressed against the tip end of the nozzle is 0.2 mm to 0.45 mm or other sizes.

Furthermore, when the shape of the tip end opening 107c, or a shape of the lower side opening of the resin tube inserted into the nozzle 107 is a circular shape or a polygonal shape having five or more corners, the nozzle 107 can easily change the sticking direction.

FIG. 12 is an enlarged cross-sectional view of the tip end 107d of the nozzle 107, and shows an example of the nozzle 107 having a shape different from that described above. The nozzle 107 may be formed of a hardly adhesive resin such as fluorine, or may be a nozzle which is formed of a metal and whose surface is subjected to a slidability improving process. In (a) of FIG. 12, since the tip end 107d has a corner, the threadlike adhesive 2 may be caught, displaced, or cut. In (b) of FIG. 12, since the tip end 107d is round, that is, the portion pressing the threadlike adhesive 2 is a curved surface, the threadlike adhesive 2 is not caught and can be favorably stuck. When the nozzle 107 shown in (b) of FIG. 12 is formed of a resin such as fluorine, the nozzle 107 may be protected by passing the nozzle 107 through a guide formed of stainless steel (SUS).

The nozzle 107 of the threadlike adhesive sticking apparatus 200 shown in FIG. 1 is movable in the up-down direction, and includes an absorption mechanism that absorbs a displacement of the nozzle 107 with respect to a displacement in the up-down direction of a base to which the nozzle 107 is attached.

That is, the nozzle 107 is fixed to a slider 213 movable in the up-down direction. The slider 213 is slidably supported by the fixing unit 214 which is a base. The spring 215 is connected between the slider 213 and the fixing unit 214. Therefore, the nozzle 107 can move relative to the fixing unit 214, absorb the displacement between the nozzle 107 and the fixing unit 214 in the up-down direction, and prevent an excessive force from being applied to the tip end side of the nozzle 107.

In the threadlike adhesive sticking apparatus 200 shown in FIG. 1, the pressing mechanism BU and a main part of the conveyance unit CU are attached to a front surface of the attachment plate 201 having a substantially rectangular shape, and are positioned by the positioning unit DU.

In the threadlike adhesive sticking apparatus 200 shown in FIG. 1, the threadlike adhesive 2 fed out from the winding body of the supply unit AU is conveyed to the nozzle 107 through a path passing through the rollers 202, 203, 207, 208, and 211 in order.

A roller 204 movable in a direction of an arrow D1 is disposed at a position facing the roller 203, and a roller 209 movable in a direction of an arrow D3 is disposed at a position facing the roller 208. The roller 204 is supported by a moving unit 205 in a rotatable state, and the roller 209 is supported by a moving unit 210 in a rotatable state.

Each of peripheral surfaces of the rollers 202, 203, 204, 207, 208, and 211 has a structure in which at least a portion facing the threadlike adhesive 2 sticks to the threadlike adhesive 2 hard.

The roller 202 is attached to an upper left corner of the attachment plate 201, and guides the threadlike adhesive 2 to the rollers 203 and 204. The tension of the threadlike adhesive 2 supplied from a supply unit AU side to the roller 202 is maintained substantially constant.

By moving the moving unit 205 to bring the roller 204 close to the roller 203 and rotating the roller 203 by an electric motor or the like (not shown), the threadlike adhesive 2 sandwiched between the rollers 203 and 204 can be fed out in a direction toward a downstream side.

The roller 204 is disposed on the upper right of the roller 203, and is attached to a lower left end portion of the moving unit 205 such as an air cylinder that moves (slides) in the direction of the arrow D1, that is, upper right and lower left directions with respect to the attachment plate 201. When the roller 204 is located at the lowest left, the roller 204 is rotated in conjunction with the rotation of the roller 203, sandwiches the threadlike adhesive 2 with the roller 203, and pulls out the threadlike adhesive 2.

An arm 206 supporting the roller 207 is a rod-shaped body extending in the left-right direction below the rollers 202 and 203 and the moving unit 205. The roller 207 is attached to a right end portion of the arm 206, and the vicinity of a left end portion is rotatably supported on the attachment plate 201 by a rotation shaft 206a. A potentiometer for calculating a position of the roller 207 is attached to the rotation shaft 206a. The arm 206 is rotated in the direction of the arrow D2 (substantially in the up-down direction) by a drive unit such as a motor provided on a rear surface of the attachment plate 201, for example. That is, the roller 207 is movable in the up-down direction by the rotation of the arm 206.

A shaft 206b, which extends along an extending direction of the arm 206 and is provided with a spiral ridge on an outer peripheral surface, protrudes from the left end portion of the arm 206. One or more weights 206c are attached to the shaft 206b. The weight 206c has a substantially disc shape, and a through hole provided at the center is formed with a groove to be screwed with the ridge of the shaft 206b. A distance between the weight 206c and the rotation shaft 206a (left end portion of the arm 206) is changed by shifting the position of the weight 206c on the shaft 206b, so that the ease of movement of the arm 206 can be controlled.

The roller 208 is attached to the upper right of the roller 207 and a right side of the roller 204 in the attachment plate 201. The roller 208 guides the threadlike adhesive 2 pulled out by the rollers 203 and 204 and passing the roller 207 to the pressing mechanism BU (nozzle 107) provided directly below the roller 208.

When the roller 207 is moved downward, that is, displaced so as to lengthen a path from the rollers 203 and 204 to the roller 208, a conveying speed of the threadlike adhesive 2 decreases. In this way, the threadlike adhesive 2 is fed out by the rollers 203 and 204, and a rapid speed change of the fed out threadlike adhesive 2 can be alleviated by the displacement of the roller 207. That is, the rollers 203, 204, 207, and 208 and the arm 206 have a function of assisting the feeding of the threadlike adhesive 2.

On a right side of the roller 208, that is, above the nozzle 107, the roller 209 attached to a left end portion of the moving unit 210 that is moved in a direction of an arrow D3 (left-right direction) with respect to the attachment plate 201 is disposed. The roller 209 is disposed adjacent to the roller 203 such that the threadlike adhesive 2 can be nipped between the roller 209 and the roller 208 when being located at the leftmost position. The roller 209 provided upstream of the nozzle 107 nips (chucks) the threadlike adhesive 2 with the roller 208 when the sticking of the threadlike adhesive 2 ends and the nozzle 107 is raised. In this state, the threadlike adhesive 2 is cut at a position close to the adherend H.

That is, when the sticking of the threadlike adhesive 2 ends at a sticking end position on the adherend H and the threadlike adhesive 2 is cut, by gripping the threadlike adhesive 2 with the rollers 208 and 209 so as not to move, the behavior of the threadlike adhesive 2 caused by a sudden change in tension can be inhibited.

In this case, since there is no need to fix the tip end opening 107c side of the nozzle 107, a distance between the tip end opening 107c and the air scissor 109 can be made closer. Therefore, the portion of the threadlike adhesive 2 corresponding to a section from the position of cutting the threadlike adhesive 2 to the tip end opening 107c, that is, the extra length can be reduced. The extra length means an extra region of the threadlike adhesive 2 that is wasted during the sticking operation.

On the other hand, the roller 211 is disposed below the rollers 208 and 209 and the moving unit 210, that is, above the nozzle 107, and is attached to a left end portion of a moving unit 212 that is moved in a direction of an arrow D4 (left-right direction) with respect to the attachment plate 201. As an example, when the roller 211 is positioned on a right side, the roller 211 allows the threadlike adhesive 2 to pass therethrough and guides the threadlike adhesive 2 into the nozzle 107, and when the threadlike adhesive 2 is cut, the roller 211 is moved to the left side to press the threadlike adhesive 2 in a left direction, and moves the cut tip end portion (lower end portion) of the threadlike adhesive 2 upward. By raising the lower end portion of the threadlike adhesive 2 after cutting the threadlike adhesive 2, it is possible to reduce the extra length at start of next sticking of the threadlike adhesive 2 (start point). When allowing the threadlike adhesive 2 to pass through a right side of the roller 211, the roller 211 is moved to the right side to pull the threadlike adhesive 2 in a right direction, so that the lower end portion of the threadlike adhesive 2 can be moved upward.

The extra length of the threadlike adhesive 2 may be reduced by rotating the roller 203 or the like in a reverse direction, but there is a concern that the threadlike adhesive 2 may be wound around the roller 203 or the like due to the reverse rotation and may not be wound around the winding body. In this regard, as described above, by nipping and cutting the threadlike adhesive 2 by the rollers 208 and 209 and then raising the lower end portion of the threadlike adhesive 2 by the roller 211, it is possible to reduce extra lengths of an end point and the start point without the problem described above.

A guide rod (not shown) erected on the front of the attachment plate 201 may be provided below the roller 211. A surface (outer peripheral surface) of the guide rod is a non-adhesive surface, and it is possible to restrict the displacement of the threadlike adhesive 2 in the left direction.

The pressing mechanism BU of the threadlike adhesive sticking apparatus 200 includes the nozzle 107, the slider 213, the fixing unit 214, and the spring 215, and sticks the threadlike adhesive 2 conveyed to the conveyance unit CU to the adherend H. The pressing mechanism BU is provided below the roller 211 and the moving unit 212 on the attachment plate 201.

The nozzle 107 is fixed to a front surface of the slider 213, and the tip end opening 107c can protrude from a lower end of the attachment plate 201. The slider 213 is movable in the up-down direction with respect to the attachment plate 201 by a linear guide or the like.

In the attachment plate 201, the fixing unit 214 is fixed above the slider 213. The spring 215 in which a shaft is inserted is held between the fixing unit 214 and an upper surface of the slider 213.

That is, the nozzle 107 of the present embodiment is movable in the up-down direction, and can absorb the displacement of the nozzle 107 with respect to the displacement in the up-down direction of the base to which the nozzle 107 is attached.

The air scissor 109 (nipper) is disposed on a right side of the pressing mechanism BU in the attachment plate 201. The air scissor 109 is moved obliquely to the lower left from a normal position by a driving unit, and cut the threadlike adhesive 2 directly below the nozzle 107. In this case, as described above, since the threadlike adhesive 2 is chucked above the nozzle 107 by the rollers 208 and 209, there is no need to provide an air chuck. Therefore, a distance between the tip end opening 107c and the threadlike adhesive 2 stuck to the adherend H can be reduced, and the extra length at the time of cutting (end point) can be reduced.

### <Modification of Threadlike Adhesive Sticking Apparatus>

### -<Modification-1>

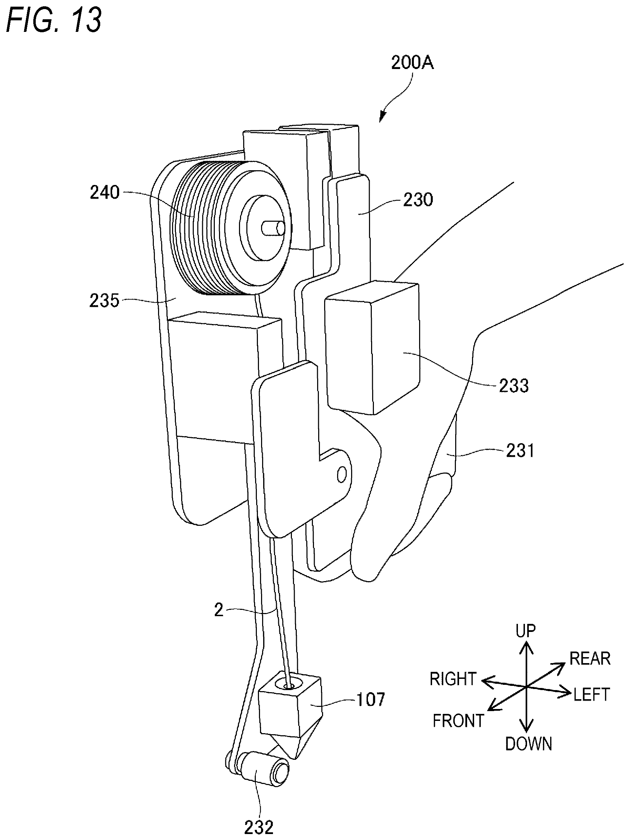

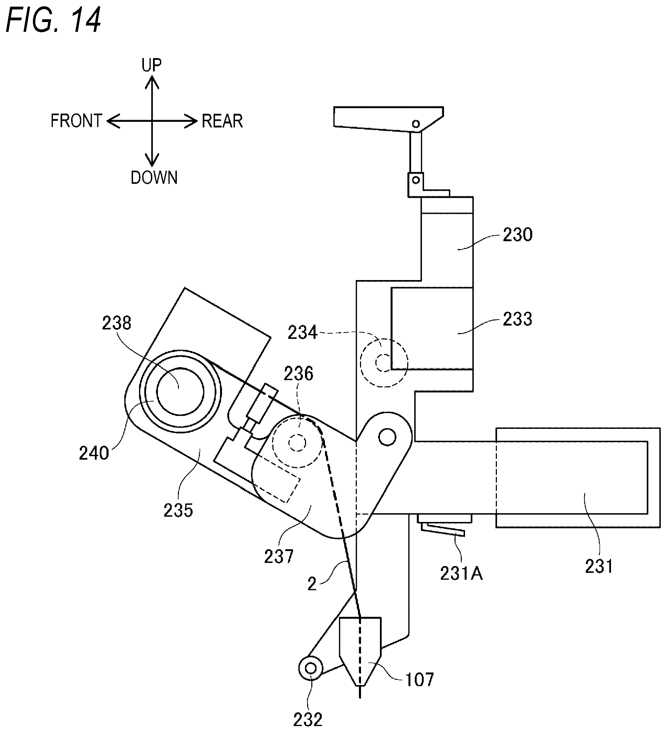

FIG. 13 is a perspective view showing a threadlike adhesive sticking apparatus 200A according to a modification, and FIG. 14 is a front view showing a state in which an opening and closing frame 235 is opened in the threadlike adhesive sticking apparatus 200A. The threadlike adhesive sticking apparatus 200A mainly includes a main body frame 230, a gripping portion 231, and the opening and closing frame 235 in which a winding body 240 capable of winding the threadlike adhesive 2 is held.

In the main body frame 230, a lower portion of an elongated plate member extending in the up-down direction is bent in an oblique direction to be tapered. The nozzle 107 is fixed to the bent location of the main body frame 230, and a pressing roller 232 is provided at the tapered lower end. As shown in FIG. 14, the nozzle 107 is attached along an axial direction of the main body frame 230. The pressing roller 232 is disposed at a position slightly above the tip end opening 107c on the front side of the tip end opening 107c of the nozzle 107. The pressing roller 232 is rotatably attached to the main body frame 230 in a vertical plane. A function of the pressing roller 232 will be described later.

A motor 233 and a roller 234 driven by the motor 233 are attached to substantially the center of the main body frame 230. The roller 234 is rotatably attached to the opening and closing frame 235 in the vertical plane, and sandwiches the threadlike adhesive 2 with a roller 236 being rotated with the rotation of the roller 234 to feed out the threadlike adhesive 2 from the winding body 240. That is, the rollers 234 and 236 function as a feeding assist mechanism. The motor is provided with a speed volume (not shown) for adjusting a rotation speed of the motor 233, that is, for manually adjusting a feeding speed of the threadlike adhesive 2.

The gripping portion 231 having a substantially rectangular plate shape is provided slightly below the center of the main body frame 230 so as to protrude rearward. The gripping portion 231 is gripped by an operator. The gripping portion 231 is provided with a switch 231A for switching on/off of the motor 233 to start/stop the feeding of the threadlike adhesive 2. As an example, the switch 231A is provided at a position where the operator can easily operate the switch 231A with an index finger while gripping the gripping portion 231, turns on the motor 233 while the switch 231A is pressed, and turns off the motor 233 when the pressing on the switch 231A is released, that is, when the switch 231A is not pressed.

The opening and closing frame 235 includes a roller holding unit 237 that rotatably holds the roller 236 in the vertical plane, and a winding body holding unit 238 that rotatably holds the winding body 240 in a perpendicular plane. The opening and closing frame 235 is pivotally supported by the main body frame 230 at the rear of the lower end side, and can be opened and closed with respect to the main body frame 230.

In an open state shown in FIG. 14, the operator sets the winding body 240 in the winding body holding unit 238, and inserts the threadlike adhesive 2 into the nozzle 107 via a rotation surface of the roller 236. Then, the operator rotates the opening and closing frame 235, on which the winding body 240 is set, rearward to close the opening and closing frame 235, and engages an upper end with the main body frame 230 to bring the opening and closing frame 235 into a closed state shown in FIG. 13.

As shown in FIG. 13, the operator grips the gripping portion 231 to bring the tip end (tip end opening 107c) of the nozzle 107 close to the adherend. In this case, in a case where the extra length of the threadlike adhesive 2 is short, the operator lowers the nozzle 107 in an oblique direction as shown in FIG. 6 (b), so that the threadlike adhesive 2 is inhibited from entering into the nozzle 107 and the start point can be stuck.

When the operator operates the switch 231A, the motor 233 is rotated, and the rollers 234 and 236 feed out the threadlike adhesive 2 from the winding body 240 by the rotation of the motor 233. When the operator moves the nozzle 107 on the adherend in an optional direction, the threadlike adhesive 2 fed out from the winding body 240 is stuck to the adherend in an optional path.

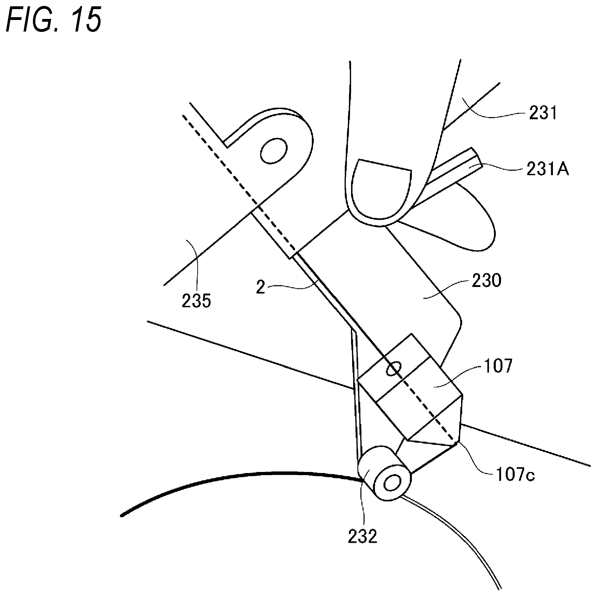

FIG. 15 shows a state in which the threadlike adhesive 2 is cut at the end of the sticking operation using the threadlike adhesive sticking apparatus 200A. When the sticking operation ends, the operator operates (releases the pressing of) the switch 231A to stop the rotation of the motor 233. At an end point position, as shown in FIG. 15, the operator tilts the main body frame 230 with respect to a vertical direction, and presses the threadlike adhesive 2 against the adherend by the pressing roller 232. By pressing the threadlike adhesive 2 with the pressing roller 232, it is possible to prevent a stuck location (end point of the threadlike adhesive 2) from being lifted and peeled off.

The operator cuts the threadlike adhesive 2 in the vicinity of the end point with a scissor in a state in which the end point is pressed by the pressing roller 232 as described above. Since the pressing roller 232 is provided in the vicinity of the nozzle 107, the operator can prevent peeling of the end point of the threadlike adhesive 2 by a simple operation of merely tilting the threadlike adhesive sticking apparatus 200A (main body frame 230) while gripping the threadlike adhesive sticking apparatus 200A.

According to the threadlike adhesive sticking apparatus 200A described above, since a plurality of locations of the peripheral portion of the tip end opening 107c of the nozzle 107 function as a pressing unit, a sticking direction can be easily changed. Therefore, the operator can stick the threadlike adhesive 2 while gripping the gripping portion 231 to move the gripping portion 231 in an optional direction.

### -<Modification-2>

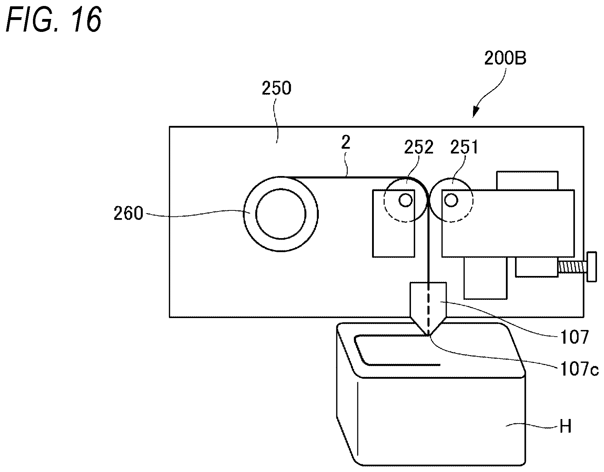

FIG. 16 is a schematic view showing a threadlike adhesive sticking apparatus 200B according to a modification. The threadlike adhesive sticking apparatus 200B includes an attachment plate 250, rollers 251 and 252 provided on the attachment plate 250, and the nozzle 107. A winding body 260 capable of winding the threadlike adhesive 2 is rotatably held by the attachment plate 250 in a vertical plane. The threadlike adhesive sticking apparatus 200B is a stationary sticking apparatus in which, for example, the attachment plate 250 is fixedly disposed and used on a table by a support frame.

The rollers 251 and 252 are disposed on a side (right side in FIG. 16) of the winding body 260 on a front surface of the attachment plate 250. The roller 251 is driven by a motor provided on a rear surface of the attachment plate 250. The roller 252 sandwiches the threadlike adhesive 2 with the roller 251, and is rotated with the rotation of the roller 251. By the rotation of the rollers 251 and 252, the threadlike adhesive 2 is fed out from the winding body 260. The nozzle 107 is fixed below (directly below) the rollers 251 and 252 at a lower end of the attachment plate 250.

The operator drives the motor to feed out the threadlike adhesive 2, brings the adherend H into contact with the tip end opening 107c of the nozzle 107, and sticks the threadlike adhesive 2 in an optional path while moving the adherend H. At the end of the sticking, the driving of the motor is stopped, and the threadlike adhesive 2 is cut by a scissor or the like.

According to the threadlike adhesive sticking apparatus 200B described above, the operator can stick the threadlike adhesive 2 to the adherend H having a planar or three-dimensional shape in an optional path by gripping the adherend H and moving the adherend H while bringing the adherend H into contact with the tip end opening 107c of the nozzle 107.

### <Details of Threadlike Adhesive 2>

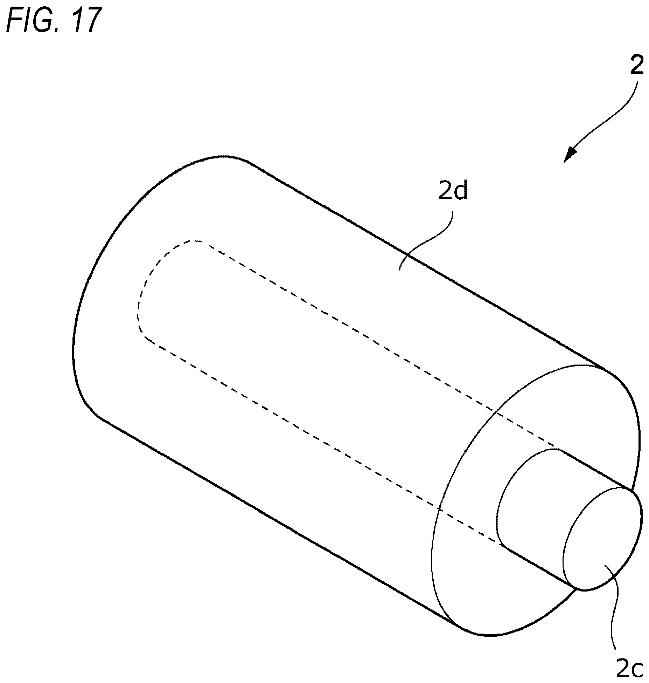

FIG. 17 shows a state in which a part of the threadlike adhesive 2 used in each of the threadlike adhesive sticking apparatuses 200, 200A, and the like is enlarged. The threadlike adhesive 2 includes a linear adhesive body including a linear core material 2c and an adhesive layer 2d that covers a surface of the core material 2c in a longitudinal direction.

The threadlike adhesive 2 is an elongated adhesive body and has a linear shape. The linear shape described here is a concept including not only a straight line shape, a curved line shape, a polygonal line shape, and the like, but also a state in which a material can be bent in various directions and angles like a yarn, that is, a threadlike shape. The adhesive layer in the present specification also includes a linear adhesive layer.

Although a cross-sectional shape of the threadlike adhesive 2 in the present configuration example is a circular shape, the present embodiment is not limited thereto, and the cross-sectional shape may be an elliptical shape, a rectangular shape such as a quadrangular shape, or the like, in addition to the circular shape.

The adhesive layer 2d contains an adhesive formed of an adhesive composition. The adhesive is not particularly limited as long as the adhesive satisfies a gel fraction and an amount of a change in the gel fraction, and a known adhesive can be used. Examples of the adhesive include an acrylic-based adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive. Among these adhesives, an acrylic-based adhesive, a urethane-based adhesive, a silicone-based adhesive, a rubber-based adhesive, or a polyester-based adhesive is preferable, and an acrylic adhesive is particularly preferable from a viewpoint of adhesiveness. The adhesive may be used alone or in combination of two or more kinds thereof. The adhesive in the present embodiment is preferably a pressure-sensitive adhesive that has adhesiveness at a room temperature and can be stuck to a surface of an adherend by a pressure generated when a surface of the adhesive and the surface of the adherend are brought into contact with each other. When the adhesive is a pressure-sensitive adhesive, the adhesive does not need to be heated and can be applied to an adherend that is sensitive to heat.

As the adhesive, either a solvent-type adhesive or a water-dispersible type adhesive can be used. The adhesive is preferably obtained by performing crosslinking by drying (performing solvent volatilization on) an adhesive composition and rapidly completing the crosslinking after drying. This is because new crosslinking does not increase after surfaces of adhesive layers come into contact with each other. Here, a water-dispersible type adhesive is preferable, and a water-dispersible type acrylic adhesive is more preferable because of high-speed coating, being friendly to the environment, and a small influence (swelling or dissolution) on a base material or a core material due to a solvent.

Here, in the adhesive body having a core material, an adhesive layer may cover the entire surface of the core material (a surface in a longitudinal direction), or may cover only at least a part of the surface of the core material. Although an adhesive layer is typically formed to be continuous, the adhesive layer is not limited to such a form, and may be formed in a regular pattern such as a dot pattern or a stripe pattern, or a random pattern. An end surface of the core material may or may not be covered by the adhesive layer. For example, when the adhesive body is cut during a producing process or during use, the end surface of the core material may not be covered by the adhesive layer.

As the core material used in the threadlike adhesive 2, for example, a resin, rubber, foam, an inorganic fiber, and a composite thereof can be used. Examples of the resin include a polyolefin such as polyethylene (PE), polypropylene (PP), an ethylene-propylene copolymer, and an ethylene-vinyl acetate copolymer; a polyester such as polyethylene terephthalate (PET); a vinyl chloride resin; a vinyl acetate resin; a polyimide resin; a polyamide resin; and a fluorine-based resin. Examples of the rubber include natural rubber, and synthetic rubber such as urethane rubber. Examples of the foam include a foamed polyurethane and a foamed polychloroprene rubber. Examples of the fiber include a glass fiber, a carbon fiber, a metal fiber, a chemical fiber, and a natural fiber. The chemical fiber includes a recycled fiber, a semi-synthetic fiber, a synthetic fiber, and the like. The natural fiber includes a plant fiber, an animal fibers, and the like. A cross-sectional shape of the core material is not particularly limited, and is usually a cross-sectional shape corresponding to a cross-sectional shape of the adhesive body.

Examples of a material of the threadlike core material that can be used in the threadlike adhesive 2 include various polymer materials such as rayon, cupra, acetate, promix, nylon, aramid, vinylon, vinylidene, polyvinyl chloride, polyester, acryl, polyethylene, polypropylene, polyurethane, polychlal, and polylactic acid; glasses; carbon fibers; various kinds of rubber such as natural rubber and synthetic rubber such as polyurethane; natural materials such as cotton and wool; and metal. As the form of the threadlike core material, for example, monofilaments, multifilaments, span yarns, finished yarns generally referred to as textured yarn, bulky yarn, and stretched yarn that are subjected to crimping or bulking, or combined yarns obtained by, for example, twisting those can be used. The cross-sectional shape is not limited to only a circular shape, and can be a rectangular shape such as a square shape, a star shape, an elliptical shape, a hollow shape, and the like.

The core material may contain various additives such as a filler such as an inorganic filler or an organic filler, an age resister, an antioxidant, an ultraviolet absorber, an antistatic agent, a lubricant, a plasticizer, and a coloring agent such as a pigment or a dye as necessary. A known or common surface treatment such as a corona discharge treatment, a plasma treatment, or application of an undercoat agent may be performed on the surface of the core material.

A size of a cross section of the core material is not particularly limited and may be appropriately selected depending on a purpose. For example, when the cross-sectional shape of the core material is a circular shape, a diameter of the cross-sectional shape of the core material is preferably 1 µm to 2000 µm, and more preferably 10 µm to 1000 µm from a viewpoint of handleability, that is, flexibility and difficulty in cutting.

A thickness of the adhesive layer is not particularly limited, and is, for example, preferably 1 µm or more, and more preferably 3 µm or more from the viewpoint of adhesiveness. The thickness of the adhesive layer is, for example, preferably 200 µm or less, and more preferably 150 µm or less from the viewpoint of thickness unevenness and drying properties. Furthermore, the thickness can be increased according to an application by stacking layers.

In particular, the threadlike adhesive 2 is preferably a pressure-sensitive adhesive body in which the adhesive forming the adhesive layer 2d has adhesiveness at a room temperature and which can be stuck to a surface of an adherend by a pressure generated when a surface of the adhesive and the surface of the adherend are brought into contact with each other. When the adhesive body is a pressure-sensitive adhesive body, the adhesive body does not need to be heated and can be applied to an adherend that is sensitive to heat.

As described above, the shape of the threadlike adhesive 2 is not particularly limited, and the larger a ratio (major axis/minor axis) of a length of the major axis to a length of the minor axis of the cross-sectional shape of the threadlike adhesive 2 is, the flatter the shape of the threadlike adhesive 2 is. The minor axis is the shortest axis among axes passing through the center of gravity of the cross section. The major axis is the longest axis among the axes passing through the center of gravity of the cross section. On the other hand, as the ratio becomes smaller, the cross-sectional shape of the threadlike adhesive 2 comes close to a circular shape, and when the cross-sectional shape of the threadlike adhesive 2 is a circular shape, the ratio has a minimum value of 1. When the ratio has a minimum value of 1, the cross-sectional shape of the threadlike adhesive 2 also includes a special shape such as a triangle and a star shape.

The threadlike adhesive 2 may have a release liner. When the threadlike adhesive 2 has the release liner, the release liner is peeled off from the adhesive layer before the threadlike adhesive 2 reaches the nozzle 107 or the like, and the adhesive body is stuck to the object. Since the threadlike adhesive 2 has the release liner, a self-adhesive force of the adhesive can be reduced, and thus the threadlike adhesive 2 can be pressed against an object in a state in which the tension of the threadlike adhesive 2 is reduced. Therefore, it is possible to prevent a problem that the threadlike adhesive 2 pressed against the object is peeled off, cut, re-stuck, and entangled by the tension, and to smoothly stick the threadlike adhesive 2.

Embodiments and usage methods of the threadlike adhesive 2 are roughly classified into the following four patterns. Here, a non-adhesive layer is a layer that covers a surface of the adhesive body, that is, a surface in the longitudinal direction, and the non-adhesive layer includes, for example, a layer that covers the adhesive body in an initial state before extending and is cut out by extending the adhesive body to exhibit adhesiveness of the adhesive body. However, a type, a material, and the like of the non-adhesive layer are not particularly limited.

1) An adhesive body without a non-adhesive layer is pressed and stuck as it is.
2) A release liner + an adhesive body without a non-adhesive layer
3) An adhesive body covered by a non-adhesive layer
4) A release liner + an adhesive body covered by a non-adhesive layer
In 2) and 4) above, the release liner is peeled off before being pressed and stuck.

Furthermore, the threadlike adhesive 2 of the present embodiment has flexibility and has a threadlike shape that can be bent in various directions and angles like a yarn. The adhesive body having flexibility, in particular, the adhesive body having a threadlike shape has an advantage in that the adhesive body can be easily applied to complicated shapes such as a curved line, a curved surface, and an uneven shape in addition to the effects described above.

For example, when an adhesive tape is stuck to an adherend having a part with a complicated shape such as a curved line, a curved surface, or an uneven shape, a wrinkle or overlapping may occur in the adhesive tape in such a part, and it is difficult to finely stick the adhesive tape while inhibiting a protrusion. The part where the wrinkle or overlapping occurs may cause a decrease in the adhesive force. In order to stick the adhesive tape while preventing the occurrence of the wrinkle or overlapping, it is conceivable to stick the adhesive tape while finely cutting the adhesive tape, but workability significantly deteriorates. On the other hand, the adhesive body having flexibility, in particular, the adhesive body having a threadlike shape can be firmly stuck without causing the wrinkle or overlapping even when being stuck to a part having a complicated shape such as a curved line, a curved surface, and an uneven shape. Furthermore, since such an adhesive body can be stuck to a part to be stuck at one time, that is, in one step, the adhesive body is excellent in workability and can be applied to an automation line.

Specific examples of an application of the threadlike adhesive body include an application to fix cables such as electric wires or optical fibers, optical fiber sensors such as an LED fiber light and fiber bragg gratings (FBG), various wire members (linear members) such as a yarn, a string, and a wire, and a narrow member, in a desired form. For example, even in a case where a wire member or a narrow member is fixed to another member in a complicated shape, the threadlike adhesive body can be firmly fixed with excellent workability while inhibiting protrusion, wrinkles, and overlapping in accordance with the complicated shape of the wire member or the narrow member. In a case where the wire member or the narrow member is fixed to another member, the threadlike adhesive body is stuck in advance in accordance with a form in which the wire member or the narrow member is to be fixed on a surface of the another member, and then, the wire member or the narrow member can be stuck and fixed in accordance with the adhesive body stuck to the surface of the another member. Alternatively, the threadlike adhesive body is stuck to the wire member or the narrow member, and then, the wire member or the narrow member may be fixed to another member in a desired form.

The threadlike adhesive body can also be suitably used for temporary fixing (temporary tacking) of an article for temporarily fixing (temporarily tacking) one article to a surface of another article. More specifically, the threadlike adhesive body can be particularly suitably used for temporary fixing (temporary tacking) in producing, for example, fiber products and leather products such as clothes, shoes, bags, and hats. However, the application is not limited to this example, and the threadlike adhesive body is suitably used for various applications in which temporary fixing (temporary tacking) is desired.

For example, when one article is fixed to a surface of another article, the one article is temporarily fixed and positioned on the surface of the another article in advance by using the threadlike adhesive body, and then both articles are fixed (finally fixed) by a fixing method such as thermocompression bonding and sewing. In this case, the threadlike adhesive body easily and temporarily fixes the two articles with avoiding a fixing unit provided between the two articles. For example, in a case where a fiber product or a leather product is sewn, if temporary fixing is performed by using the threadlike adhesive body, the temporary fixing can be easily performed while avoiding a part to be sewed, and the adhesive can be easily prevented from adhering to a needle.

As described above, even when shapes of the two articles are complicated shapes such as a curved line, a curved surface, and an uneven shape, the threadlike adhesive body can be well stuck while inhibiting a protrusion, a wrinkle, and overlapping, and can be stuck in one step, and the workability is improved.

Even in a case of a member that is easily deformed, such as fabric, cloth, and leather that form a fiber product or a leather product, temporary fixing can be performed by using the threadlike adhesive body, so that deformation of the member due to the tension can be inhibited or prevented, and a design after fixing (final fixing) is improved.

Further, after two articles are fixed (finally fixed) by the threadlike adhesive body, the threadlike adhesive body can be pulled out and removed from the two articles that are fixed (finally fixed) if necessary. In this case, the adhesive can be prevented from squeezing out, and deterioration of a design due to aging discoloration of the remaining adhesive can be well prevented.

The threadlike adhesive body can be twisted with a yarn made of another material to form a composite yarn or can be woven with a yarn or cloth made of another material, thereby function combination can be achieved. The cloth includes nonwoven fabric and sheet.

Furthermore, the threadlike adhesive 2 stuck to the release liner (temporary support) can be transferred to the adherend by the threadlike adhesive sticking apparatus 200 and the like of the present embodiment. The method will be described below.

First, the threadlike adhesive 2 is stuck to a temporary support in a film shape or the like by the threadlike adhesive sticking apparatus and the method of sticking a threadlike adhesive of the present embodiment described above. In order to stick the threadlike adhesive 2 to the adherend in a desired shape, the threadlike adhesive 2 is stuck (drawn) on the temporary support in a shape obtained by inverting the desired shape.

Next, the adhesive surface of the threadlike adhesive 2 stuck to the temporary support is brought into contact with the adherend, and the threadlike adhesive 2 is pressed and adhered to the adherend via the temporary support by a roller, a finger, or the like.

Thereafter, the temporary support is peeled off and removed from the threadlike adhesive 2 adhered to the adherend to expose the threadlike adhesive 2. In this way, the threadlike adhesive 2 is stuck to the adherend in a desired shape.

In order to reliably transfer the threadlike adhesive, that is, in order to prevent the threadlike adhesive from being peeled off from the adherend and remaining on the temporary support, it is preferable to peel off the temporary support from the adherend by peeling, and a peeling angle in this case is preferably 5° or more, more preferably 10° or more, and still more preferably 20° or more. When peeling the temporary support by peeling, the temporary support may be peeled off while being deformed, the adherend may be peeled off while being deformed, or both the temporary support and the adherend may be peeled off while being deformed. A suitable peeling method may be appropriately selected according to hardness (deformability) of the temporary support and the adherend.

As described above, the threadlike adhesive 2 is formed (drawn) on the temporary support into a shape obtained by inverting a desired shape and then transferred to stick the threadlike adhesive 2 to the adherend in a desired shape. Accordingly, the threadlike adhesive 2 can be easily stuck to the adherend even when the sticking shape is complicated.

Based on such a feature, the method of sticking the threadlike adhesive by transfer is suitable as, for example, a method of sticking the threadlike adhesive body for fixing a cable such as an electric wire or an optical fiber, an LED fiber light, optical fiber sensors such as fiber bragg gratings (FBG), various wires (linear members) such as a yarn, a string, or a wire, or a narrow member in a desired form. Even in the case of fixing a wire or a narrow member to another member having a complicated shape, by using the method of sticking the threadlike adhesive by transfer, the threadlike adhesive can be easily stuck to a member to which the wire or the narrow member is stuck in accordance with a complicated shape of the wire or the narrow member.

For example, in a case where the threadlike adhesive is used for temporary fixing when sewing fiber products or leather products such as clothes, shoes, bags, or hats, it is easy to temporarily fix the threadlike adhesive while avoiding a part to be sewed, and it is possible to easily prevent the adhesive from adhering to the needle. When an article to be sewn has a complicated shape or is easily deformed, the threadlike adhesive may not be easily stuck, but even in such a case, the threadlike adhesive can be easily stuck by the method of sticking the threadlike adhesive by transfer as described above.

The present invention is not limited to the embodiment described above, and modifications, improvements, and the like can be made as appropriate. Materials, shapes, sizes, numerical values, forms, numbers, arrangement locations, and the like of components in the embodiments described above are set as desired and are not limited as long as the present invention can be achieved.

### -<Advantages of Adhesive Guiding Apparatus>

For example, in the adhesive guiding apparatus 10 shown in FIG. 2, the movement of the top 12 can inhibit the threadlike adhesive 2 from flowing backward due to the influence of the force applied to the threadlike adhesive 2 or the change in tension occurring during the cutting when the nozzle 11 approaches the adherend H. That is, in the path of the threadlike adhesive 2, the top 12 sticks to the threadlike adhesive 2 more easily or slips harder than the nozzle 11, and thus due to the flexure of the threadlike adhesive 2 during backflow, the threadlike adhesive 2 sticks to the top 12 and inhibits the movement of the threadlike adhesive 2. Accordingly, the tip end of the threadlike adhesive 2 can be prevented from entering into the through hole 11a of the nozzle 11. Therefore, it becomes possible to perform the sticking operation of the threadlike adhesive 2 efficiently, and the operation can be easily automated.

Since there is no need to grip the vicinity of the cut location when cutting the threadlike adhesive 2, the length of the wasted region from the tip end opening 11c to the cut location of the threadlike adhesive 2, that is, the extra length of the threadlike adhesive 2 can be reduced.

When the top 12 is movable with respect to the top receiving groove 11b, for example, the behaviors of the top 12 as shown in (a) of FIG. 8 and (b) of FIG. 8 occur, and a behavior suitable for the operation of sticking the threadlike adhesive 2 to the adherend H can be given to the threadlike adhesive 2. That is, the backflow of the threadlike adhesive 2 is inhibited to prevent the threadlike adhesive 2 from entering into the through hole 11a of the nozzle 11, and when the threadlike adhesive 2 moves in the forward direction, the top 12 can move so as to peel off from the threadlike adhesive 2.

Although the embodiments described above describe a case of sticking the threadlike adhesive 2, the adhesive guiding apparatus of the present invention can be similarly used for guiding a tape-shaped adhesive, for example.

The present invention is not limited to the embodiments described above, and can be made in various modifications within the scope of the claims.

The present application is based on a Japanese patent application (No. 2021-159443) filed on September 29,2021.

### REFERENCE SIGNS LIST

2 threadlike adhesive
2a, 2b, 2y deformation portion
2c core material
2d adhesive layer
2x tip end
3 grip
240, 260 winding body
10, 10A, 10B adhesive guiding apparatus
11, 11A nozzle
11a through hole
11b top receiving groove
11c tip end opening
11d tip end
12 top
12a through hole
12b lower end surface
12c upper end surface
12d upper opening portion
13 sphere
14 upper cover member
15 lower cover member
16 sphere holding space
16A rod-shaped body holding space
17 bolt
18 rod-shaped body
20 nozzle coupling unit
107 nozzle
107c tip end opening
107d tip end
109 air scissor
200, 200A, 200B threadlike adhesive sticking apparatus
201 attachment plate
202, 203, 204, 207, 208, 209, 211 roller
205 moving unit
206 arm
206a rotation shaft
206b shaft
206c weight
210, 212 moving unit
213 slider
214 fixing unit
215 spring
H adherend
AU supply unit
BU pressing mechanism
CU conveyance unit
DU positioning unit

## Claims

1. An adhesive guiding apparatus (10, 10A, 10B) having an adhesive path configured to allow an elongated adhesive (2) to pass through in a longitudinal direction of the elongated adhesive (2), and capable of guiding at least a tip end portion (11c, 107c) of the elongated adhesive (2) to a position facing a desired object to be stuck, the adhesive guiding apparatus (10, 10A, 10B) comprising: a nozzle unit (11, 11A, 107) having a through hole (11a) forming a part of the adhesive path, and in which a tip end portion (11c, 107c) of the through hole (11a) is configured to be disposed at a position facing the object to be stuck; and **characterised in that** the adhesive guiding apparatus (10, 10A, 10B) further comprises a braking member (12) disposed on an upstream side of the through hole (12a) of the nozzle unit (11, 11A, 107) on the adhesive path, wherein the braking member (12) has a property that is superior to the nozzle unit (11, 11A, 107) in at least one of ease of sticking to the elongated adhesive (2) and a difficulty in slipping.

2. The adhesive guiding apparatus (10, 10A, 10B) according to claim 1, wherein the elongated adhesive (2) is a threadlike adhesive (2).

3. The adhesive guiding apparatus (10, 10A, 10B) according to claim 2, wherein the through hole (11a) forms a cylindrical space larger than an outer shape of the elongated adhesive (2) in the nozzle unit (11, 11A, 107) as the part of the adhesive path.

4. The adhesive guiding apparatus (10, 10A, 10B) according to any one of claims 1 to 3, wherein the braking member (12) has a function of inhibiting the elongated adhesive (2) from flowing backward toward an upstream direction when a force applied to the tip end portion (11c, 107c) of the elongated adhesive (2) changes while the tip end portion (11c, 107c) of the elongated adhesive (2) led out from a tip end portion (11c, 107c) of the nozzle unit (11, 11A, 107) is facing the object to be stuck.

5. The adhesive guiding apparatus (10, 10A, 10B) according to any one of claims 1 to 3, wherein at least one of a material, a structure, a shape, and a dimension of a portion of the braking member (12) facing the adhesive path is determined such that an adhesive force generated when adhering the object to be stuck and the elongated adhesive (2) is relatively larger than an adhesive force generated when adhering the braking member (12) and the elongated adhesive (2).

6. The adhesive guiding apparatus (10, 10A, 10B) according to claim 2 or 3, wherein the braking member (12) has a through hole (12a) forming a part of the adhesive path, and a ratio of a hole diameter of the through hole (11a) of the nozzle unit (11, 11A, 107) to a hole diameter of the through hole (12a) of the braking member (12) is 1:0.7 to 1.5.

7. The adhesive guiding apparatus (10, 10A, 10B) according to any one of claims 1 to 3, wherein a feeding mechanism (203, 204) configured to feed out the elongated adhesive (2) into the adhesive path toward the nozzle unit (11, 11A, 107) is disposed at an upstream side of the braking member (12), and a holding mechanism (208, 209) configured to hold a part of the fed out elongated adhesive (2) is disposed between the feeding mechanism (203, 204) and the braking member (12).

8. The adhesive guiding apparatus (10, 10A, 10B) according to claim 3, wherein the nozzle unit (11, 11A, 107) includes a pressing unit (11d) configured to press the elongated adhesive (2) led out from the through hole (11a) against a surface of the object to be stuck at a tip end portion (11c, 107c) facing the object to be stuck, and the pressing unit (11d) is formed at a plurality of locations or over an entirety of an outer peripheral edge portion of the through hole (11a).

9. The adhesive guiding apparatus (10, 10A, 10B) according to any one of claims 1 to 3, wherein the nozzle unit (11, 11A, 107) has a funnel-shaped concave portion (11b) that communicates with the through hole (11a) in the vicinity of a top portion, the braking member (12) has an inverted cone shape configured to fit into the funnel-shaped concave portion (11b), the braking member (12) has a through hole (12a) in a portion corresponding to the adhesive path, and the braking member (12) is supported at a location of the funnel-shaped concave portion (11b) in a movable state with respect to the nozzle unit (11, 11A, 107).

10. The adhesive guiding apparatus (10, 10A, 10B) according to any one of claims 1 to 3, wherein the braking member (12) includes one or more spheres (13) whose surfaces are disposed at positions adjacent to the adhesive path, and a sphere support unit (14, 15) configured to support the one or more spheres in a rotatable state and hold the one or more spheres (13) within a predetermined region (16).

11. The adhesive guiding apparatus (10, 10A, 10B) according to any one of claims 1 to 3, wherein the nozzle unit (11, 11A, 107) has a concave portion (16A) that communicates with the through hole (11a) in the vicinity of a top portion, the braking member (12) has a rod-shaped body (18) configured to fit into the concave portion (16A), the rod-shaped body (18) is disposed at a position adjacent to the adhesive path, and the rod-shaped body (18) is supported at a location of the concave portion (16A) in a movable or rotatable state with respect to the nozzle unit (11, 11A, 107).

12. The adhesive guiding apparatus (10, 10A, 10B) according to any one of claims 1 to 3, further comprising: a winding body (240, 260) configured to hold the elongated adhesive (2) to be wound around surroundings; a feeding mechanism (203, 204) configured to pull out the elongated adhesive (2) from the winding body (240, 260) and feed out the elongated adhesive (2) toward the nozzle unit (11, 11A, 107); and an assist mechanism (206, 207) configured to apply an external force in a feeding direction to the elongated adhesive (2) fed out from the winding body (240, 260), wherein the nozzle unit (11, 11A, 107) presses the fed out elongated adhesive (2) against the object to be stuck.

13. The adhesive guiding apparatus (10, 10A, 10B) according to any one of claims 1 to 3, further comprising: a positioning mechanism configured to support the nozzle unit (11, 11A, 107) and adjust a positional relationship between the nozzle unit (11, 11A, 107) and the object to be stuck; and an absorption mechanism (213, 215) configured to correct a relative position of the nozzle unit (11, 11A, 107) and the positioning mechanism with respect to a pressing direction when a tip end (107c) of the nozzle unit (11, 11A, 107) presses the elongated adhesive (2) against the object to be stuck.

14. An adhesive sticking apparatus (200), comprising: the adhesive guiding apparatus (10, 10A, 10B) according to any one of claims 1 to 3.

15. A method of sticking an adhesive, comprising: sticking the elongated adhesive (2) to the object to be stuck by using the adhesive sticking apparatus (200) according to claim 14.

## Patentansprüche

1. Haftmittelführungseinrichtung (10, 10A, 10B), die einen Haftmittelpfad aufweist, der so ausgebildet ist, dass er ermöglicht, dass ein längliches Haftmittel (2) in einer Längsrichtung des länglichen Haftmittels (2) hindurch verläuft, und in der Lage ist, mindestens einen Spitzenendabschnitt (11c, 107c) des länglichen Haftmittels (2) in eine einem gewünschten, zu beklebenden Objekt zugewandte Position zu führen, wobei die Haftmittelführungseinrichtung (10, 10A, 10B) umfasst: eine Düseneinheit (11, 11A, 107), die ein Durchgangsloch (11a) aufweist, das einen Teil des Haftmittelpfads bildet, und wobei ein Spitzenendabschnitt (11c, 107c) des Durchgangslochs (11a) so ausgebildet ist, dass er an einer dem zu beklebenden Objekt zugewandten Position angeordnet ist; und **dadurch gekennzeichnet, dass** die Haftmittelführungseinrichtung (10, 10A, 10B) weiter ein Bremselement (12) umfasst, das auf einer stromaufwärts gerichteten Seite des Durchgangslochs (12a) der Düseneinheit (11, 11A, 107) auf dem Haftmittelpfad angeordnet ist, wobei das Bremselement (12) eine Eigenschaft aufweist, die der Düseneinheit (11, 11A, 107) in einem leichteren Haften an dem länglichen Haftmittel (2) und/oder einer Schwierigkeit bei dem Verrutschen überlegen ist.

2. Haftmittelführungseinrichtung (10, 10A, 10B) nach Anspruch 1, wobei das längliche Haftmittel (2) ein fadenförmiges Haftmittel (2) ist.

3. Haftmittelführungseinrichtung (10, 10A, 10B) nach Anspruch 2, wobei das Durchgangsloch (11a) in der Düseneinheit (11, 11A, 107) als Teil des Haftmittelpfads einen zylindrischen Raum bildet, der größer als eine Außenform des länglichen Haftmittels (2) ist.

4. Haftmittelführungseinrichtung (10, 10A, 10B) nach einem der Ansprüche 1 bis 3, wobei das Bremselement (12) die Funktion aufweist, zu verhindern, dass das längliche Haftmittel (2) rückwärts in eine stromaufwärts gerichtete Richtung fließt, wenn sich eine auf den Spitzenendabschnitt (11c, 107c) des länglichen Haftmittels (2) ausgeübte Kraft ändert, während der Spitzenendabschnitt (11c, 107c) des länglichen Haftmittels (2), der aus einem Spitzenendabschnitt (11c, 107c) der Düseneinheit (11, 11A, 107) herausgeführt wird, dem zu beklebenden Objekt zugewandt ist.

5. Haftmittelführungseinrichtung (10, 10A, 10B) nach einem der Ansprüche 1 bis 3, wobei mindestens eines aus einem Material, einer Struktur, einer Form und einer Abmessung eines dem Haftmittelpfad zugewandten Abschnitts des Bremselements (12) so bestimmt ist, dass eine Haftkraft, die bei dem Verkleben des zu beklebenden Objekts und des länglichen Haftmittels (2) erzeugt wird, relativ größer ist als eine Haftkraft, die bei dem Verkleben des Bremselements (12) und des länglichen Haftmittels (2) erzeugt wird.

6. Haftmittelführungseinrichtung (10, 10A, 10B) nach Anspruch 2 oder 3, wobei das Bremselement (12) ein Durchgangsloch (12a), das einen Teil des Haftmittelpfads bildet, und ein Verhältnis von einem Lochdurchmesser des Durchgangslochs (11a) der Düseneinheit (11, 11A, 107) zu einem Lochdurchmesser des Durchgangslochs (12a) des Bremselements (12) von 1:0,7 bis 1,5 aufweist.

7. Haftmittelführungseinrichtung (10, 10A, 10B) nach einem der Ansprüche 1 bis 3, wobei ein Zuführmechanismus (203, 204) so ausgebildet ist, dass er das längliche Haftmittel (2) in den Haftmittelpfad zu der Düseneinheit (11, 11A, 107) zuführt, und an einer stromaufwärts gerichteten Seite des Bremselements (12) angeordnet ist, und ein Haltemechanismus (208, 209) so ausgebildet ist, dass er einen Teil des herausgeführten länglichen Haftmittels (2) hält, und zwischen dem Zuführmechanismus (203, 204) und dem Bremselement (12) angeordnet ist.

8. Haftmittelführungseinrichtung (10, 10A, 10B) nach Anspruch 3, wobei die Düseneinheit (11, 11A, 107) eine Presseinheit (11d) einschließt, die so ausgebildet ist, dass sie das aus dem Durchgangsloch (11a) herausgeführte längliche Haftmittel (2) auf eine Oberfläche des zu beklebenden Objekts an einem dem zu beklebenden Objekt zugewandten Spitzenendabschnitt (11c, 107c) presst, und die Presseinheit (11d) an einer Vielzahl von Stellen oder über den gesamten äußeren peripheren Randabschnitt des Durchgangslochs (11a) ausgebildet ist.

9. Haftmittelführungseinrichtung (10, 10A, 10B) nach einem der Ansprüche 1 bis 3, wobei die Düseneinheit (11, 11A, 107) einen trichterförmigen konkaven Abschnitt (11b) aufweist, der mit dem Durchgangsloch (11a) in der Nähe eines oberen Abschnitts in Verbindung steht, das Bremselement (12) eine umgekehrte Kegelform aufweist, die so ausgebildet ist, dass sie in den trichterförmigen konkaven Abschnitt (11b) passt, das Bremselement (12) ein Durchgangsloch (12a) in einem Abschnitt aufweist, der dem Haftmittelpfad entspricht, und das Bremselement (12) an einer Stelle des trichterförmigen konkaven Abschnitts (11b) in einem beweglichen Zustand relativ zu der Düseneinheit (11, 11A, 107) gelagert ist.

10. Haftmittelführungseinrichtung (10, 10A, 10B) nach einem der Ansprüche 1 bis 3, wobei das Bremselement (12) eine oder mehrere Kugeln (13), deren Oberflächen an Positionen angrenzend an den Haftmittelpfad angeordnet sind, und eine Kugelträgereinheit (14, 15) einschließt, die so ausgebildet ist, dass sie die eine oder mehrere Kugeln in einem drehbaren Zustand lagert und die eine oder mehrere Kugeln (13) innerhalb eines vorbestimmten Bereichs (16) hält.

11. Haftmittelführungseinrichtung (10, 10A, 10B) nach einem der Ansprüche 1 bis 3, wobei die Düseneinheit (11, 11A, 107) einen konkaven Abschnitt (16A) aufweist, der mit dem Durchgangsloch (11a) in der Nähe eines oberen Abschnitts in Verbindung steht, das Bremselement (12) einen stabförmigen Körper (18) aufweist, der so ausgebildet ist, dass er in den konkaven Abschnitt (16A) passt, der stabförmige Körper (18) an einer Position angrenzend an den Haftmittelpfad angeordnet ist, und der stabförmige Körper (18) an einer Stelle des konkaven Abschnitts (16A) in einem beweglichen oder drehbaren Zustand in Bezug auf die Düseneinheit (11, 11A, 107) gelagert ist.

12. Haftmittelführungseinrichtung (10, 10A, 10B) nach einem der Ansprüche 1 bis 3, weiter umfassend: einen Wickelkörper (240, 260), der so ausgebildet ist, dass er das längliche Haftmittel (2) hält, der um Außenseiten gewickelt werden soll; einen Zuführmechanismus (203, 204), der so ausgebildet ist, dass er das längliche Haftmittel (2) aus dem Wickelkörper (240, 260) herauszieht und das längliche Haftmittel (2) in Richtung der Düseneinheit (11, 11A, 107) zuführt; und einen Hilfsmechanismus (206, 207), der so ausgebildet ist, dass er eine äußere Kraft in Zuführrichtung auf das aus dem Wickelkörper (240, 260) herausgeführte längliche Haftmittel (2) ausübt, wobei die Düseneinheit (11, 11A, 107) das herausgeführte längliche Haftmittel (2) auf das zu beklebende Objekt presst.

13. Haftmittelführungseinrichtung (10, 10A, 10B) nach einem der Ansprüche 1 bis 3, weiter umfassend: einen Positionierungsmechanismus, der so ausgebildet ist, dass er die Düseneinheit (11, 11A, 107) lagert und ein Positionsverhältnis zwischen der Düseneinheit (11, 11A, 107) und dem zu beklebenden Objekt einstellt; und einen Absorptionsmechanismus (213, 215), der so ausgebildet ist, dass er eine relative Position der Düseneinheit (11, 11A, 107) und den Positionierungsmechanismus in Bezug auf eine Pressrichtung korrigiert, wenn ein Spitzenende (107c) der Düseneinheit (11, 11A, 107) das längliche Haftmittel (2) gegen das zu beklebende Objekt presst.

14. Haftmittelaufbringungseinrichtung (200), umfassend: die Haftmittelführungseinrichtung (10, 10A, 10B) nach einem der Ansprüche 1 bis 3.

15. Verfahren zum Aufbringen eines Haftmittels, umfassend: Aufbringen des länglichen Haftmittels (2) auf das zu beklebende Objekt unter Verwendung der Haftmittelaufbringungseinrichtung (200) nach Anspruch 14.

## Revendications

1. Appareil (10, 10A, 10B) de guidage d'adhésif présentant un chemin d'adhésif configuré pour permettre à un adhésif allongé (2) de passer à travers dans une direction longitudinale de l'adhésif allongé (2), et apte à guider au moins une portion (11c, 107c) d'extrémité de pointe de l'adhésif allongé (2) vers une position faisant face à un objet souhaité devant être collé, l'appareil (10, 10A, 10B) de guidage d'adhésif comprenant : une unité de buse (11, 11A, 107) présentant un trou traversant (11a) formant une partie du chemin d'adhésif, et dans lequel une portion (11c, 107c) d'extrémité de pointe du trou traversant (11a) est configurée pour être disposée à une position faisant face à l'objet devant être collé ; et **caractérisé en ce que** l'appareil (10, 10A, 10B) de guidage d'adhésif comprend en outre un élément de freinage (12) disposé sur un côté amont du trou traversant (12a) de l'unité de buse (11, 11A, 107) sur le chemin d'adhésif, dans lequel l'élément de freinage (12) présente une propriété qui est supérieure à celle de l'unité de buse (11, 11A, 107) en ce qui concerne au moins l'une parmi une facilité de collage à l'adhésif allongé (2) et une difficulté de glissement.

2. Appareil (10, 10A, 10B) de guidage d'adhésif selon la revendication 1, dans lequel l'adhésif allongé (2) est un adhésif filiforme (2).

3. Appareil (10, 10A, 10B) de guidage d'adhésif selon la revendication 2, dans lequel le trou traversant (11a) forme un espace cylindrique plus grand qu'une forme externe de l'adhésif allongé (2) dans l'unité de buse (11, 11A, 107) en tant que partie du chemin d'adhésif.

4. Appareil (10, 10A, 10B) de guidage d'adhésif selon l'une quelconque des revendications 1 à 3, dans lequel l'élément de freinage (12) présente une fonction consistant à inhiber une circulation en arrière de l'adhésif allongé (2) vers une direction amont lorsqu'une force appliquée à la portion (11c, 107c) d'extrémité de pointe de l'adhésif allongé (2) change tandis que la portion (11c, 107c) d'extrémité de pointe de l'adhésif allongé (2) acheminée hors d'une portion (11c, 107c) d'extrémité de pointe de l'unité de buse (11, 11A, 107) fait face à l'objet devant être collé.

5. Appareil (10, 10A, 10B) de guidage d'adhésif selon l'une quelconque des revendications 1 à 3, dans lequel au moins l'un parmi un matériau, une structure, une forme et une dimension d'une portion de l'élément de freinage (12) faisant face au chemin d'adhésif est déterminé de telle sorte qu'une force adhésive générée lors de l'adhésion de l'objet devant être collé et de l'adhésif allongé (2) est relativement plus grande qu'une force adhésive générée lors de l'adhésion de l'élément de freinage (12) et de l'adhésif allongé (2).

6. Appareil (10, 10A, 10B) de guidage d'adhésif selon la revendication 2 ou la revendication 3, dans lequel l'élément de freinage (12) présente un trou traversant (12a) formant une partie du chemin d'adhésif, et un rapport entre un diamètre de trou du trou traversant (11a) de l'unité de buse (11, 11A, 107) et un diamètre de trou du trou traversant (12a) de l'élément de freinage (12) est de 1:0,7 à 1,5.

7. Appareil (10, 10A, 10B) de guidage d'adhésif selon l'une quelconque des revendications 1 à 3, dans lequel un mécanisme d'alimentation (203, 204) configuré pour dévider l'adhésif allongé (2) dans le chemin d'adhésif vers l'unité de buse (11, 11A, 107) est disposé au niveau d'un côté amont de l'élément de freinage (12), et un mécanisme de maintien (208, 209) configuré pour maintenir une partie de l'adhésif allongé (2) dévidé est disposé entre le mécanisme d'alimentation (203, 204) et l'élément de freinage (12).

8. Appareil (10, 10A, 10B) de guidage d'adhésif selon la revendication 3, dans lequel l'unité de buse (11, 11A, 107) inclut une unité de pression (11d) configurée pour presser l'adhésif allongé (2) acheminé hors du trou traversant (11a) contre une surface de l'objet devant être collé au niveau d'une portion (11c, 107c) d'extrémité de pointe faisant face à l'objet devant être collé, et l'unité de pression (11d) est formée à une pluralité d'emplacements ou sur une totalité d'une portion de bord périphérique externe du trou traversant (11a).

9. Appareil (10, 10A, 10B) de guidage d'adhésif selon l'une quelconque des revendications 1 à 3, dans lequel l'unité de buse (11, 11A, 107) présente une portion concave (11b) en forme d'entonnoir qui communique avec le trou traversant (11a) à proximité d'une portion supérieure, l'élément de freinage (12) présente une forme de cône inversé configurée pour s'ajuster dans la portion concave (11b) en forme d'entonnoir, l'élément de freinage (12) présente un trou traversant (12a) dans une portion correspondant au chemin d'adhésif, et l'élément de freinage (12) est supporté à un emplacement de la portion concave (11b) en forme d'entonnoir dans un état mobile par rapport à l'unité de buse (11, 11A, 107).

10. Appareil (10, 10A, 10B) de guidage d'adhésif selon l'une quelconque des revendications 1 à 3, dans lequel l'élément de freinage (12) inclut une ou plusieurs sphères (13) dont les surfaces sont disposées à des positions adjacentes au chemin d'adhésif, et une unité (14, 15) de support de sphère configurée pour supporter les une ou plusieurs sphères dans un état rotatif et maintenir les une ou plusieurs sphères (13) dans une région prédéterminée (16).

11. Appareil (10, 10A, 10B) de guidage d'adhésif selon l'une quelconque des revendications 1 à 3, dans lequel l'unité de buse (11, 11A, 107) présente une portion concave (16A) qui communique avec le trou traversant (11a) à proximité d'une portion supérieure, l'élément de freinage (12) présente un corps (18) en forme de tige configuré pour s'ajuster dans la portion concave (16A), le corps (18) en forme de tige est disposé à une position adjacente au chemin d'adhésif, et le corps (18) en forme de tige est supporté à un emplacement de la portion concave (16A) dans un état mobile ou rotatif par rapport à l'unité de buse (11, 11A, 107).

12. Appareil (10, 10A, 10B) de guidage d'adhésif selon l'une quelconque des revendications 1 à 3, comprenant en outre : un corps de bobinage (240, 260) configuré pour maintenir l'adhésif allongé (2) devant être bobiné autour du cadre ; un mécanisme d'alimentation (203, 204) configuré pour extraire l'adhésif allongé (2) du corps de bobinage (240, 260) et dévider l'adhésif allongé (2) vers l'unité de buse (11, 11A, 107) ; et un mécanisme d'assistance (206, 207) configuré pour appliquer une force extérieure dans une direction d'alimentation à l'adhésif allongé (2) dévidé du corps de bobinage (240, 260), dans lequel l'unité de buse (11, 11A, 107) presse l'adhésif allongé (2) dévidé contre l'objet devant être collé.

13. Appareil (10, 10A, 10B) de guidage d'adhésif selon l'une quelconque des revendications 1 à 3, comprenant en outre : un mécanisme de positionnement configuré pour supporter l'unité de buse (11, 11A, 107) et régler une relation de position entre l'unité de buse (11, 11A, 107) et l'objet devant être collé ; et un mécanisme d'absorption (213, 215) configuré pour corriger une position relative de l'unité de buse (11, 11A, 107) et du mécanisme de positionnement par rapport à une direction de pression lorsqu'une extrémité de pointe (107c) de l'unité de buse (11, 11A, 107) presse l'adhésif allongé (2) contre l'objet devant être collé.

14. Appareil (200) de collage d'adhésif, comprenant : l'appareil (10, 10A, 10B) de guidage d'adhésif selon l'une quelconque des revendications 1 à 3.

15. Procédé de collage d'un adhésif, comprenant : le collage de l'adhésif allongé (2) sur l'objet devant être collé en utilisant l'appareil (200) de collage d'adhésif selon la revendication 14.
